# EUROPÄISCHE PATENTSCHRIFT

(11) **EP 3 987 904 B1**
(45) Veröffentlichungstag und Bekanntmachung des Hinweises auf die Patenterteilung: **28.01.2026**
(21) Anmeldenummer: 21203334.4
(22) Anmeldetag: 19.10.2021
(51) Int. Cl.: A01C 7/08, A01C 7/04

(54) **VERFAHREN ZUM BETREIBEN EINER LANDWIRTSCHAFTLICHEN VERTEILMASCHINE ZUR VERTEILUNG VON GRANULAREM VERTEILGUT**
METHOD FOR OPERATING AN AGRICULTURAL DISTRIBUTOR FOR DISTRIBUTING GRANULAR MATERIAL
PROCÉDÉ DE FONCTIONNEMENT D'UNE MACHINE À ÉPANDRE AGRICOLE DESTINÉ À L'ÉPANDAGE D'UN PRODUIT À ÉPANDRE GRANULAIRE

(30) Priorität: 21.10.2020 DE 102020127709
(43) Veröffentlichungstag der Anmeldung: 27.04.2022
(73) Patentinhaber: Horsch Maschinen GmbH, 92421 Schwandorf (DE)
(72) Erfinder: ERHARD, Manfred, 92421 Schwandorf (DE); KÖBLER, Manfred, 92421 Schwandorf (DE)
(74) Vertreter: v. Bezold & Partner Patentanwälte - PartG mbB

(56) Entgegenhaltungen:
- EP-A1- 3 335 535
- DE-A1- 102018 111 584
- DE-U1- 202019 107 077
- US-A1- 2010 313 801
- US-A1- 2015 189 827

## Beschreibung

Die Erfindung betrifft ein Verfahren zum Betreiben einer landwirtschaftlichen Verteilmaschine, zur Verteilung von granularem Verteilgut.

Landwirtschaftliche Verteilmaschinen finden bei der Verteilung, insbesondere bei der vereinzelten Verteilung von granularem Verteilgut, wie bspw. Saatgut, Dünger oder dergl., auf einer landwirtschaftlichen Fläche Verwendung. Um die jeweiligen, das Verteilgut vereinzelnden Vereinzelungseinrichtungen mit dem zu verteilenden granularen Verteilgut zu versorgen, werden häufig pneumatische Fördersysteme eingesetzt.

Eine landwirtschaftliche Verteilmaschine mit einem pneumatischen Fördersystem wurde bspw. durch die DE 10 2015 105 919 A1 bereits bekannt. Das zu verteilende Verteilgut wird mittels einer Zuführluftströmung zu Vereinzelungseinrichtungen gefördert, zudem werden die Vereinzelungseinrichtungen zur Vereinzelung des Verteilgut mit Druck beaufschlagt. Um sowohl die pneumatische Förderung des Verteilgut als auch die Druckbeaufschlagung der Vereinzelungseinrichtung sicher zu stellen sind unterschiedliche Druckniveaus erforderlich, wobei diese mittels einer Strömungserzeugungseinrichtung, mit unterschiedliche Strömungsgeschwindigkeiten und/oder Druckniveaus ausgebenden Bereichen erzeugt werden, wodurch jeweils eine feste, nicht veränderbare Druckdifferenz zwischen der Zuführluftströmung und der Druckbeaufschlagung erzeugt wird.

Praxisversuche haben jedoch gezeigt, dass eine Größe der Druckdifferenz in Abhängigkeit der jeweiligen Sorte des Verteilgut verschieden ist, was jedoch mit der aus dem Stand der Technik bekannten Strömungserzeugungseinrichtung nicht ohne weiteres bewerkstelligt werden kann.

Die DE 10 2018 111584 A1 offenbart separate Strömungserzeugungseinrichtungen für die pneumatische Förderung des Verteilguts als auch die Druckbeaufschlagung der Vereinzelungseinrichtung, ohne jedoch auf unterschiedliche Druckniveaus oder deren Beeinflussung einzugehen.

Aufgabe der Erfindung ist es somit, die beschriebenen Nachteile des Standes der Technik zu beseitigen. Insbesondere soll eine für verschiedenste Verteilgüter flexibel einsetzbare landwirtschaftliche Verteilmaschine geschaffen werden.

Diese Aufgaben werden gelöst durch ein Verfahren zum Betreiben einer landwirtschaftlichen Verteilmaschine mit den Merkmalen des Verfahrensanspruch 1.

Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft ein Verfahren zum Betreiben einer landwirtschaftlichen Verteilmaschine, zur Verteilung von granularem Verteilgut. Vorzugsweise zur Verteilung von granularem Verteilgut auf einer landwirtschaftlichen Fläche (z.B. Ackerfläche).

Die landwirtschaftliche Verteilmaschine umfasst wenigstens ein Vereinzelungssystem, mit zumindest zwei Vereinzelungseinrichtungen, welche Vereinzelungseinrichtungen eingerichtet sind, granulares Verteilgut mittels eines mit Druck beaufschlagten Vereinzelungsorgan zu vereinzeln und auszugeben, wobei die Vereinzelungseinrichtungen mit einer Luftleitung mit einer Luftströmung zur Druckbeaufschlagung des jeweiligen Vereinzelungsorgan wirktechnisch verbunden sind.

Zudem umfasst die landwirtschaftliche Verteilmaschine wenigstens ein Fördersystem zum Fördern von granularem Verteilgut, wobei das Fördersystem wenigstens einen zentralen Behälter aufweist, welcher Behälter eingerichtet ist, granulares Verteilgut bereitzustellen und welcher Behälter über Zuführleitungen mit den Vereinzelungseinrichtungen wirktechnisch verbunden ist, wobei die Zuführleitungen eingerichtet sind, mit Hilfe einer Zuführluftströmung granulares Verteilgut der jeweiligen Vereinzelungseinrichtung zuzuführen.

Des Weiteren umfasst die landwirtschaftliche Verteilmaschine wenigstens ein Strömungserzeugungssystem, welches eingerichtet ist, die Luftströmung und/oder die Zuführluftströmung zu erzeugen.

Um eine für verschiedenste Verteilgüter flexibel einsetzbare landwirtschaftliche Verteilmaschine zu schaffen ist die erfindungsgemäße Verteilmaschine des Verfahrens weitergebildet durch eine Anpassungseinrichtung welche eingerichtet ist, eine Differenz der durch die jeweilige Luftströmung und/oder die jeweilige Zuführluftströmung hervorgerufenen, Druckniveaus, vorzugsweise der statischen Druckniveaus, zwischen wenigstens einer Luftleitung (z.B. des Vereinzelungssystem) und einer Zuführleitung (z.B. des Fördersystem) zu beeinflussen, vorzugsweise zu steuern und/oder voreinzustellen.

Die Erfindung macht sich die Erkenntnis zu Nutze, dass durch die Verwendung einer Anpassungseinrichtung die Luftströmung und/oder die Zuführluftströmung beeinflusst werden können und zweckmäßig insbesondere derartig aufeinander abgestimmt werden können um sowohl eine Druckluftbasierte Vereinzelung als auch eine Druckluftbasierte Förderung von Verteilgut gewährleisten zu können, zweckmäßig unabhängig von der Sorte des Verteilgut gewährleisten zu können.

Infolge der erfindungsgemäßen Maßnahmen wird somit eine gegenüber dem Stand der Technik wesentlich flexibler einsetzbare landwirtschaftliche Verteilmaschine geschaffen, welche aufgrund der veränderbaren Differenz der Druckniveaus, vorzugsweise der statischen Druckniveaus, insbesondere für verschiedenste Sorten von granularem Verteilgut funktionssicher eingesetzt werden kann.

Im Kontext der Erfindung umfasst ein Beeinflussen der Differenz insbesondere ein Anpassen, ein Verändern und/oder dergl. Wobei ein Beeinflussen auch ein Steuern (z.B. mittels einer Steuereinrichtung) und/oder ein (z.B. manuell) Voreinstellen umfassen kann.

Das Beeinflussen (z.B. das Steuern und/oder das Voreinstellen) kann mittelbar und/oder unmittelbar erfolgen.

Die vorliegende Beschreibung bezieht sich insbesondere auf einen Betriebszustand der Verteilmaschine in der mittels der Zuführleitung mit Hilfe einer Zuführluftströmung granulares Verteilgut der jeweiligen Vereinzelungseinrichtung zugeführt wird.

Im Kontext der Erfindung umfasst die Definition Vereinzelungseinrichtung insbesondere Druckdifferenzbasierte Vereinzelungseinrichtungen, das heißt Vereinzelungseinrichtungen, bei welchen an einem insbesondere rotierenden und Öffnungen (z.B. Schlitze, Bohrungen, Perforationen) aufweisenden Vereinzelungsorgan mittels eines Überdruck oder eines Unterdruck oder einer Kombination aus einem Überdruck und einem Unterdruck eine Druckdifferenz an den Öffnungen erzeugt wird und somit jeweils durch Rotation des Vereinzelungsorgan wenigstens oder ausschließlich ein Korn des granularem Verteilgut von den Öffnungen aufgenommen wird. Das Vereinzelungsorgan kann hierbei zweckmäßig eine Scheibe und/oder eine Trommel und/oder dergl. sein. Die Öffnungen des Vereinzelungsorgan können zweckmäßig kreisförmig (z.B. in einem Lochkreis) in jeweils gleichen Abständen zueinander am Vereinzelungsorgan angebracht sein. Das Vereinzelungsorgan kann zudem mittels eines motorischen und/oder mechanischen Antrieb rotatorisch angetrieben sein.

Die landwirtschaftliche Verteilmaschine ist vorzugsweise eine Saatmaschine, bspw. eine Einzelkornmaschine.

Das zu verteilende granulare Verteilgut kann insbesondere Saatgut (z.B. Mais, Raps, Soja, Sonnenblumen, Zuckerrüben oder dergl.) sein, könnte aber auch Dünger oder dergl. sein.

Im Kontext der Erfindung kann das Vereinzelungssystem insbesondere einen Konstantverbraucher bilden und das Fördersystem insbesondere keinen Konstantverbraucher bilden.

Gemäß der Erfindung ist es ebenfalls vorgesehen, dass ein Beeinflussen, vorzugsweise ein Steuern und/oder ein Voreinstellen der Differenz des Druckniveaus, vorzugsweise der statischen Druckniveaus mittels der Anpassungseinrichtung derartig erfolgt, dass in der Zuführleitung ein Höheres statisches Druckniveau als in der Luftleitung vorhanden ist, vorzugsweise dauerhaft vorhanden ist. Womit insbesondere ein störungsfreies Fördern von Verteilgut in der Zuführleitung gewährleistet werden kann, da die Gefahr der Erzeugung eines Rückstaudruck im Fördersystem durch das Druckniveau aus dem Vereinzelungssystem reduziert oder gänzlich verhindert wird.

Eine Ausführungsvariante der Offenbarung kann vorsehen, dass das Strömungserzeugungssystem mindestens eine Antriebseinrichtung aufweist, welche eingerichtet ist, die Luftströmung in der Luftleitung und die Zuführluftströmung in der Zuführleitung zu erzeugen.

Erfindungsgemäß ist vorgesehen, dass das Strömungserzeugungssystem mindestens eine erste Antriebseinrichtung und eine zweite Antriebseinrichtung aufweist, wobei die erste Antriebseinrichtung eingerichtet ist, die Luftströmung in der Luftleitung zu erzeugen und wobei die zweite Antriebseinrichtung eingerichtet ist, die Zuführluftströmung in der Zuführleitung zu erzeugen.

Als Antriebseinrichtung kann jegliche Art von Strömung erzeugender Komponente eingesetzt werden, bspw. ein Gebläse, ein Kompressor, eine Turbine und/oder dergl. Wobei die Antriebseinrichtung zweckmäßig eingerichtet sein kann, der Luftleitung und/oder der Zuführleitung Energie zuzuführen.

Eine bedienerfreundliche Einstellung der Verteilmaschine kann gemäß einer Weiterbildung der Erfindung dadurch erreicht werden, dass das Strömungserzeugungssystem durch eine erste Antriebseinrichtung gebildet ist, welche eingerichtet ist, in der Luftleitung eine Luftströmung zu erzeugen und das das Strömungserzeugungssystem durch eine zweite Antriebseinrichtung gebildet ist, welche eingerichtet ist, in der Zuführleitung eine Zuführluftströmung zu erzeugen, wobei die erste Antriebseinrichtung und/oder die zweite Antriebseinrichtung mittels einer, die Anpassungseinrichtung bildenden, Steuereinrichtung (z.B. Rechnereinheit, Bedieneinheit und/oder dergl.) derartig beeinflussbar vorzugsweise steuerbar und/oder voreinstellbar sind, dass eine Differenz der Druckniveaus, vorzugsweise der statischen Druckniveaus, durch manuelle Vorgabe (z.B. durch Bedienereingabe) und/oder automatisiert (z.B. anhand von Daten einer Messeinrichtung und/oder anhand eines voneinander bedingtem Antreiben der ersten und der zweiten Antriebseinrichtung) erzeugt wird, insbesondere eine definierte und/oder definierbare Größe der Differenz der Druckniveaus, vorzugsweise der statischen Druckniveaus, durch manuelle Vorgabe und/oder automatisiert erzeugt wird.

Gemäß der Erfindung ist es vorgesehen, dass mittels der Anpassungseinrichtung eine Schaltreihenfolge der Antriebseinrichtungen definiert werden kann. Wobei das Strömungserzeugungssystem durch eine erste Antriebseinrichtung gebildet ist, welche eingerichtet ist, in der Luftleitung eine Luftströmung zu erzeugen, und das Strömungserzeugungssystem durch eine zweite Antriebseinrichtung gebildet ist, welche eingerichtet ist, in der Zuführleitung eine Zuführluftströmung zu erzeugen, wobei die erste Antriebseinrichtung und/oder die zweite Antriebseinrichtung mittels einer, die Anpassungseinrichtung bildenden, Steuereinrichtung, derartig beeinflusst, vorzugsweise gesteuert und/oder voreingestellt werden, dass eine Aktivierung der zweiten Antriebseinrichtung zeitgleich oder vor der ersten Antriebseinrichtung erfolgt und dass eine Deaktivierung der zweiten Antriebsvorrichtung zeitgleich oder nach der ersten Antriebseinrichtung erfolgt.

Ein Beeinflussen, vorzugsweise ein Steuern und/oder Voreinstellen der ersten Antriebseinrichtung und/oder der zweiten Antriebseinrichtung kann hierbei bspw. ein Verändern der Drehzahl der ersten Antriebseinrichtung und/oder der zweiten Antriebseinrichtung umfassen. Das heißt, es kann bspw. durch manuelle Vorgabe die Drehzahl von zumindest einer Antriebseinrichtung derartig angepasst werden, um eine gewünschte Größe der Differenz der Druckniveaus zu erhalten und/oder es kann automatisiert die Drehzahl von zumindest einer Antriebseinrichtung derartig angepasst werden, um eine gewünschte Größe der Differenz der Druckniveaus zu erhalten. Wobei auch wiederum die Größe der Differenz der Druckniveaus manuell und/oder automatisiert (z.B. Anhand der Sorte des granularen Verteilgut) vorgegeben werden kann. Wobei durch das Beeinflussen auch die jeweilige Strömungsgeschwindigkeit in der Luftleitung und/oder der Zuführleitung angepasst werden kann.

Eine energetisch- und leistungsoptimierte landwirtschaftliche Verteilmaschine kann gemäß einer Weiterbildung der Erfindung dadurch erreicht werden, dass das Strömungserzeugungssystem durch die erste Antriebseinrichtung gebildet ist und dass die Anpassungseinrichtung durch die zweite Antriebseinrichtung gebildet ist, wobei die zweite Antriebseinrichtung mit der ersten Antriebseinrichtung gekoppelt ist (z.B. mittels einer Koppelleitung) und dazu eingerichtet ist, um zumindest anteilig mit einer Luftströmung, der ersten Antriebseinrichtung versorgt zu werden und eine Erhöhung eines Druckniveau, vorzugsweise eines statischen Druckniveau, in der Zuführleitung durchzuführen.

Wobei es möglich ist, dass die Koppelung derartig erfolgt, dass die Versorgung der zweiten Antriebseinrichtung zumindest anteilig mittels der ersten Antriebseinrichtung erfolgt und zumindest anteilig durch die Atmosphäre erfolgt und/oder ausschließlich mittels der ersten Antriebseinrichtung erfolgt. Insofern die zweite Antriebseinrichtung bspw. durch ein Gebläse gebildet ist, kann die erste Antriebseinrichtung mit dem Ansaugbereich der zweiten Antriebseinrichtung gekoppelt sein.

Alternativ oder ergänzend kann die Anpassungseinrichtung eingerichtet sein, eine Luftströmung von zumindest einer Luftleitung zu empfangen und ein erhöhtes Druckniveau unter Erzeugung zumindest eines Zuführluftstrom an die Zuführleitung abzugeben, wodurch eine Differenz der Druckniveaus, vorzugsweise der statischen Druckniveaus, zwischen wenigstens einer Luftleitung und der Zuführleitung erzeugt wird. Somit wird mittels der Anpassungseinrichtung der Luftströmung zusätzliche Energie zugeführt um somit in der Zuführleitung ein höheres Druckniveau, vorzugsweise ein höheres statisches Druckniveau, als in der Luftleitung zu erhalten.

Es ist zweckmäßig möglich, dass das Strömungserzeugungssystem durch die erste Antriebseinrichtung gebildet ist und dass die Anpassungseinrichtung durch die zweite Antriebseinrichtung gebildet ist, wobei die Anpassungseinrichtung wirktechnisch in Reihe zur ersten Antriebseinrichtung angeordnet sein kann. Dies kann bedeuten, dass bspw. durch ein Beeinflussen der ersten Antriebseinrichtung auch eine direkte Veränderung der mittels der zweiten Antriebseinrichtung erzeugten Zuführluftströmung erfolgt, wodurch der von der zweiten Antriebseinrichtung erzeugte Zuführluftstrom unmittelbar in Abhängigkeit von der, von der ersten Antriebseinrichtung bereitgestellten Luftströmung beeinflusst wird.

Gemäß einer anderen Ausführungsvariante der Erfindung kann vorgesehen sein, dass die Anpassungseinrichtung durch eine Druckreduzierungseinrichtung (z.B. Ventil, Drossel, Weiche, Gleichdruckregler, Anpassungsventil und/oder dergl. ) gebildet ist, welche dem Strömungserzeugungssystem wirktechnisch (z.B. strömungstechnisch) nachgeordnet ist und/oder zumindest einer Luftleitung zugeordnet (z.B. wirktechnisch zugeordnet) ist, wobei die Druckreduzierungseinrichtung eingerichtet ist, ein Druckniveau, vorzugsweise ein statisches Druckniveau, in der Luftleitung durch ein beeinflussen, vorzugsweise ein steuern und/oder ein voreinstellen, zu reduzieren. Das heißt zweckmäßig gegenüber der Zuführleitung zu reduzieren.

Die Druckreduzierungseinrichtung kann in einer einfachen Ausführungsvariante eine Weiche sein oder ein Strömungsteiler sein und zweckmäßig eingerichtet sein, den Rückstaudruck in der Luftleitung und/oder der Zuführleitung zu beeinflussen.

Die Druckreduzierungseinrichtung ist zweckmäßig insbesondere dazu eingerichtet, eine Druckspreitzung festzulegen und/oder durchzuführen.

Gemäß einer Weiterbildung der Erfindung ist es möglich, dass die Anpassungseinrichtung durch eine Druckreduzierungseinrichtung gebildet ist, welche dem Strömungserzeugungssystem wirktechnisch nachgeordnet ist und/oder zumindest einer Luftleitung zugeordnet ist, wobei die Druckreduzierungseinrichtung nicht veränderbare Querschnitte aufweisen kann, wodurch die mittels der Druckreduzierungseinrichtung erzeugte Differenz des Druckniveau durch die geometrischen Querschnitte definiert sein kann.

Ein verbesserte Anpassungseinrichtung kann gemäß einer bevorzugten Ausführungsvariante der Erfindung dadurch erreicht werden, dass zum Beeinflussen, vorzugsweise zum Steuern und/oder zum Voreinstellen, der Anpassungseinrichtung eine Stelleinrichtung (z.B. ein oder mehrere Aktor(en), Motor(en), Zylinder und/oder dergl.) zugeordnet ist und das zumindest dem Vereinzelungssystem (z.B. der Luftleitung und/oder der Vereinzelungseinrichtung) und/oder dem Fördersystem (z.B. der Dosierbox, dem Behälter, der Zuführleitung und/oder der Aufnahmeeinheit) eine Messeinrichtung wirktechnisch zugeordnet ist, wobei die Messeinrichtung eingerichtet ist, ein Druckniveau (z.B. statisches Druckniveau) und/oder eine Luftströmung und/oder eine Zuführluftströmung im Vereinzelungssystem und/oder im Fördersystem zu erfassen und/oder einen Differenzdruck zwischen dem Vereinzelungssystem (z.B. der Luftleitung) und dem Fördersystem (z.B. der Zuführleitung und/oder der Dosierbox) zu erfassen und dass eine Steuereinrichtung vorgesehen ist, welche eingerichtet ist, Stellsignale für die Stelleinrichtung anhand der mittels der Messeinrichtung erfassten Druckniveaus und/oder Luftströmungen und/oder Zuführluftströmungen und/oder Differenzdrücken derartig bereitzustellen, dass eine Differenz der Druckniveaus erzeugt wird, vorzugsweise eine definierte und/oder definierbare Größe der Differenz der Druckniveaus, vorzugsweise der statischen Druckniveaus, erzeugt wird.

Mittels der erfindungsgemäßen Anpassungseinrichtung kann somit vorzugsweise auf sich verändernde Reibungsverluste in der Luftleitung und/oder der Zuführleitung durch ein manuelles und/oder automatisiertes Beeinflussen reagiert werden.

Eine alternative oder ergänzende erfindungsgemäße Ausführungsvariante kann vorsehen, dass zum Beeinflussen, vorzugsweise zum Steuern und/oder zum Voreinstellen, die Anpassungseinrichtung manuell verstellbar ist (z.B. durch eine Bedienperson) und dass zumindest dem Vereinzelungssystem (z.B. der Luftleitung und/oder der Vereinzelungseinrichtung) und/oder dem Fördersystem (z.B. der Dosierbox, dem Behälter, der Zuführleitung und/oder der Aufnahmeeinheit) eine Messeinrichtung wirktechnisch zugeordnet ist, wobei die Messeinrichtung eingerichtet ist, ein Druckniveau und/oder eine Luftströmung und/oder eine Zuführluftströmung im Vereinzelungssystem und/oder im Fördersystem zu erfassen und/oder einen Differenzdruck zwischen der Luftleitung und der Zuführleitung zu erfassen und dass eine Anzeigeeinrichtung (z.B. Manometer, Terminal, mobiles Endgerät) vorhanden ist welche eingerichtet ist, ein jeweiliges Druckniveau und/oder eine jeweilige Luftströmung und/oder Zuführluftströmung anzuzeigen und/oder eine Druckdifferenz zwischen dem Vereinzelungssystem und dem Fördersystem anzuzeigen, vorzugsweise zwischen wenigstens einer Luftleitung und einer Zuführleitung anzuzeigen. Somit kann eine Einstellung der Anpassungseinrichtung für eine Bedienperson entsprechend erleichtert werden.

Erfindungsgemäß ist es insbesondere möglich, dass dem Fördersystem im Bereich der Dosierbox eine Messeinrichtung zugeordnet ist oder stromaufwärts zur Dosierbox eine Messeinrichtung angeordnet ist.

Die Messeinrichtung kann durch wenigstens einen Drucksensor, Differenzdrucksensor, Massendurchflussmesser, Anemometer, Partikelsensor, Durchflusssensor, Piezosensor und/oder dergl. gebildet sein.

In einer Weiterbildung der Vereinzelungseinrichtung kann vorgesehen sein, dass an der jeweiligen Vereinzelungseinrichtung eine Aufnahmeeinheit zur Aufnahme des granularen Verteilgut aus der jeweiligen Zuführleitung zugeordnet ist, wobei die Aufnahmeeinheit zur zumindest teilweisen Trennung (z.B. Separierung) des granularen Verteilgut aus der Zuführluftströmung eingerichtet sein kann.

Wobei alternativ oder ergänzend die Aufnahmeeinheit mittels einer Verbindungseinrichtung (z.B. Verbindungsleitung, Verbindungskanal, Verbindungsschacht und/oder dergl. Verbindung) wirktechnisch (z.B. strömungstechnisch) mit der Luftleitung gekoppelt sein kann, vorzugsweise verbunden sein kann und dass die Aufnahmeeinheit eingerichtet sein kann, die jeweilige Zuführluftströmung anteilig in Richtung des Vereinzelungsorgan (z.B. durch einen Verteilgutvorrat) zu leiten und anteilig mittels der Verbindungseinrichtung in Richtung der Luftleitung zu leiten, vorzugsweise derartig, dass zumindest nahezu keine Zuführluftströmung unmittelbar aus der Aufnahmeeinheit in die Atmosphäre abgegeben wird.

Wobei es alternativ oder ergänzend auch möglich wäre, dass die Aufnahmeeinheit mittels einer Verbindungseinrichtung wirktechnisch mit dem Vereinzelungsorgan gekoppelt ist, vorzugsweise verbunden ist und dass die Aufnahmeeinheit eingerichtet ist, die jeweilige Zuführluftströmung anteilig vorzugsweise durch einen Verteilgutvorrat in Richtung des Vereinzelungsorgan zu leiten und/oder anteilig mittels der Verbindungseinrichtung in Richtung des Vereinzelungsorgan zu leiten, vorzugsweise derartig, dass zumindest nahezu keine Zuführluftströmung unmittelbar aus der Aufnahmeeinheit in die Atmosphäre abgegeben wird.

Wobei jeweils eine anteilige Aufteilung der Zuführluftströmung in Abhängigkeit des Füllgrad in der Aufnahmeeinheit variieren kann und mitunter gänzlich unterbrochen werden kann. Wobei auch eine Zuführluftströmung in Abhängigkeit des Füllgrad unterbrochen werden kann.

Die Aufnahmeeinheit kann zweckmäßig einen zusätzlichen Sammelbehälter und/oder Verteilgutvorrat bilden und dementsprechend verschiedenste Volumen aufweisen.

Die Aufnahmeeinheit kann mit einem Gehäuse der Vereinzelungseinrichtung verbunden sein und/oder mittels bspw. einer Leitung, eines Schachts, eines Kanals oder dergl. mit dem Vereinzelungsorgan verbunden sein. Wobei das Gehäuse, die Leitung, der Schacht, der Kanal oder dergl. zudem einen Verteilgutvorrat bilden können.

Die Anpassungseinrichtung ist erfindungsgemäß dazu eingerichtet, um in der Zuführleitung ein höheres statisches Druckniveau, als in der Luftleitung zu erzeugen oder zu gewährleisten, vorzugsweise dauerhaft zu gewährleisten.

Zur jeweiligen Sicherstellung der Luftströmung und der Zuführluftströmung ist erfindungsgemäß vorgesehen, dass eine mittels der Anpassungseinrichtung erzeugte Differenz des Druckniveau, nämlich des statischen Druckniveau zwischen der Luftleitung und der Zuführleitung ausschließlich innerhalb eines Schwellenwertbereich veränderbar ist, vorzugsweise ausschließlich innerhalb eines minimalen Schwellenwert und eines maximalen Schwellenwert veränderbar ist. Wobei ein minimaler Schwellenwert mindestens 0,1mbar (Millibar), oder mindestens 0,5mbar oder mindestens 1mbar oder mindestens 5mbar oder mindestens 10mbar beträgt und dass ein maximaler Schwellenwert maximal 40mbar oder maximal 50mbar oder maximal 70mbar beträgt. Dies bedeutet, dass in der jeweiligen Zuführleitung das Druckniveau mindestens 0,1mbar oder mindestens 10mbar und maximal 40mbar oder maximal 70mbar größer ist als in der jeweiligen Luftleitung.

Wobei die Anpassungseinrichtung zur Einhaltung des Schwellenwertbereich zweckmäßig nur innerhalb definierter und/oder definierbarer Schwellenwerte beinflussbar vorzugsweise steuerbar und/oder voreinstellbar sein kann, bspw. mittels einer Stelleinrichtung beinflussbar, vorzugsweise steuerbar und/oder voreinstellbar sein kann. Wobei wiederum die Steuereinrichtung eingerichtet sein kann, derartige Stellsignale für die Stelleinrichtung bereitzustellen, dass entsprechende Schwellenwerte nicht überschritten oder unterschritten werden. Als Beispiel hierfür kann die Drehzahl und/oder die Antriebsleistung der Antriebseinrichtung und/oder die Drehzahl und/oder die Antriebsleitung einer die Anpassungseinrichtung bildenden Antriebseinrichtung nur innerhalb definierter und/oder definierbarer Schwellenwerte beinflussbar sein, vorzugsweise steuerbar und/oder voreinstellbar sein. Optional oder ergänzend können auch durch manuelle Vorgabe Drehzahlen nur innerhalb definierten und/oder definierbarer Schwellenwerte auswählbar sein.

Zur Vermeidung von Fehlfunktionen der Anpassungseinrichtung kann in einer Weiterbildung der Erfindung vorgesehen sein, dass zum Beeinflussen, vorzugsweise zum Steuern und/oder zum Voreinstellen, der Anpassungseinrichtung eine Stelleinrichtung zugeordnet ist und das eine Steuereinrichtung vorgesehen ist, welche eingerichtet ist, Stellsignale für die Stelleinrichtung anhand einer Vorgabe der Größe der Differenz des Druckniveau, vorzugsweise anhand einer Vorgabe der Größe der Differenz des statischen Druckniveau, bereitzustellen, wobei eine Vorgabe der Druckdifferenz zumindest erfolgt durch eine manuelle Benutzereingabe und/oder anhand einer Sorte des granularen Verteilgut (z.B. Tausendkorngewicht, Verteilgutbeschaffenheit, Homogenität des Verteilgut, Form, Größe) und/oder anhand flächenbezogener Eigenschaften (z.B. Ackerschlagkartei) und/oder anhand maschinenspezifischer Eigenschaften (z.B. Maschinengeometrie, Leitungslängen, Querschnitte, Abstände). So ist es bspw. möglich, dass in eine Steuereinrichtung bspw. eingegeben wird, um welche Sorte des granularen Verteilgut es sich handelt und dass die Steuereinrichtung eingerichtet ist, eine Größe der Differenz des Druckniveau basierend hierauf bereitzustellen und zweckmäßig entsprechende Stellsignale für die Anpassungseinrichtung, respektive für die Stelleinrichtung bereitzustellen. Wobei die Steuereinrichtung hierfür auch eine Datenbank aufweisen oder mit einer Datenbank signalverbunden und/oder signalverbindbar sein kann und/oder auch mit einem Positionsbestimmungssystem (z.B. GPS-System) signalverbunden und/oder signalverbindbar sein kann.

Gemäß einer Weiterbildung der Erfindung ist es möglich, dass die Steuereinrichtung eingerichtet ist, einen Sollwert für eine Größe der Differenz des Druckniveau, vorzugsweise des statischen Druckniveau vorzugeben (z.B. anzuzeigen), wobei es zudem möglich ist, dass bspw. manuell durch eine Bedienperson und/oder automatisiert ein Akzeptieren oder Ändern des Sollwert erfolgt und dass darüber hinaus mittels der Steuereinrichtung in Abhängigkeit des akzeptierten oder veränderten Sollwert das Stellsignal für die Stelleinrichtung der Antriebseinrichtung und/oder die Stelleinrichtung der Anpassungseinrichtung entsprechend mittels der Steuereinrichtung bereitgestellt wird.

Dem Fördersystem, respektive dem Behälter kann zudem eine Dosierbox, bspw. in Form eines oder mehrerer Dosiergerät(e) zugeordnet sein, welche zur Übergabe von Verteilgut aus dem Behälter in die jeweilige Zuführleitung eingerichtet ist.

Es sei darauf hingewiesen, dass im Kontext der Erfindung unter jegliche als "Leitung" definierte Komponente auch Kanäle, Rohre, Schächte und/oder dergl. subsumierbar sind, also bspw. auch Rohre der Trägerstruktur. Somit können bspw. auch Rohre der Trägerstruktur als Luftleitung und/oder Zuführleitung eingesetzt werden. Wobei es zudem nicht zwingend nötig ist, dass jeder Vereinzelungseinrichtung jeweils eine separate Luftleitung und/oder Zuführleitung zugeordnet ist, sondern es kann auch vorgesehen sein, dass eine Luftleitung und/oder Zuführleitung bspw. mittels Y-Stücken mit zwei oder mehr Vereinzelungseinrichtungen verbunden sind, wobei jedoch auch bei einer derartigen Ausführungsvariante zumindest eine Luftleitung mit einer Luftströmung mit der Vereinzelungseinrichtung wirktechnisch verbunden ist und eine Zuführleitung mit einer Zuführluftströmung wirktechnisch mit der jeweiligen Vereinzelungseinrichtung verbunden ist. Insbesondere muss sich eine Luftleitung und/oder eine Zuführleitung nicht durchgängig über die gesamte Länge zwischen dem Strömungserzeugungssystem und/oder dem Behälter und der Vereinzelungseinrichtung erstrecken.

Es sei noch darauf hingewiesen, dass eine Vorgabe einer Druckdifferenz oder eine Vorgabe einer Größe einer Druckdifferenz gemäß einer bevorzugten Ausführungsvariante lediglich eine Vorgabe umfassen kann, welches Druckniveau größer sein soll (z.B. durch Betätigung eines Stellelement) und somit nicht zwingend einer Vorgabe von exakten Einstellwerten bedarf.

Die Steuereinrichtung weist bspw. eine Rechnereinheit, einen Bordcomputer, eine Bedienterminal (z.B. mobiles Endgerät) und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der landwirtschaftlichen Verteilmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die landwirtschaftliche Verteilmaschine gelten somit auch für das Verfahren und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit dem Verfahren offenbart sind, demnach auch für die landwirtschaftliche Verteilmaschine offenbart und entsprechend beanspruchbar sind.

Das erfindungsgemäße Verfahren umfasst die Verfahrensschritte und Merkmale des Anspruchs 1.

Gemäß einer Weiterbildung des erfindungsgemäßen Verfahren kann vorgesehen sein, dass zum Beeinflussen, vorzugsweise zum Steuern und/oder zum Voreinstellen der Anpassungseinrichtung eine Stelleinrichtung zugeordnet ist und das zumindest dem Vereinzelungssystem und/oder dem Fördersystem eine Messeinrichtung wirktechnisch zugeordnet ist, wobei die Messeinrichtung eingerichtet ist, ein Druckniveau und/oder eine Luftströmung und/oder eine Zuführluftströmung im Vereinzelungssystem und/oder im Fördersystem zu erfassen und/oder eine Druckdifferenz zwischen dem Vereinzelungssystem und dem Fördersystem zu erfassen und dass eine Steuereinrichtung vorgesehen ist, welche eingerichtet ist, Stellsignale für die Stelleinrichtung anhand der mittels der Messeinrichtung erfassten Druckniveaus und/oder Luftströmungen und/oder Zuführluftströmungen und/oder Differenzdrücken derartig bereitzustellen, dass eine Differenz der Druckniveaus erzeugt wird, vorzugsweise eine definierte und/oder definierbare Größe der Differenz der Druckniveaus, vorzugsweise der statischen Druckniveaus, erzeugt wird.

Alternativ oder ergänzend kann das Verfahren zudem vorsehen, dass zum Beeinflussen, vorzugsweise zum Steuern und/oder zum Voreinstellen, der Anpassungseinrichtung eine Stelleinrichtung zugeordnet ist und das eine Steuereinrichtung vorgesehen ist, welche eingerichtet ist, Stellsignale für die Stelleinrichtung anhand einer Vorgabe der Größe der Differenz des Druckniveau, vorzugsweise anhand einer Vorgabe der Größe der Differenz des statischen Druckniveau, bereitzustellen, wobei eine Vorgabe der Druckdifferenz zumindest erfolgt durch eine manuelle Benutzereingabe und/oder anhand einer Sorte des granularen Verteilgut und/oder anhand flächenbezogener Eigenschaften und/oder anhand maschinenspezifischer Eigenschaften.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer landwirtschaftlichen Verteilmaschine,
- Figur 2A: eine schematische Darstellung eines Vereinzelungssystem, eines Fördersystems, eines Strömungserzeugungssystem und einer Anpassungseinrichtung, wobei der Vereinzelungseinrichtung eine nur zum Teil gefüllte Aufnahmeeinheit zugeordnet ist,
- Figur 2B: eine schematische Darstellung gemäß der Figur 2A in einer Draufsicht,
- Figur 2C: eine schematische Darstellung gemäß der Figur 2A mit einer gefüllten Aufnahmeeinheit,
- Figur 3: eine schematische Darstellung eines Vereinzelungssystem, eines Fördersystems, eines durch eine Antriebseinrichtung gebildeten und nicht unter den Erfindungsgegenstand fallenden Strömungserzeugungssystem und einer Anpassungseinrichtung,
- Figur 4A: eine schematische Darstellung eines Vereinzelungssystem, eines Fördersystems, eines Strömungserzeugungssystem und einer Anpassungseinrichtung, wobei der Vereinzelungseinrichtung eine nur zum Teil gefüllte Aufnahmeeinheit zugeordnet ist,
- Figur 4B: eine schematische Darstellung gemäß der Figur 4A in einer Draufsicht,
- Figur 4C: eine schematische Darstellung gemäß der Figur 4A mit einer gefüllten Aufnahmeeinheit,
- Figur 5A: eine schematische Darstellung eines Vereinzelungssystem, eines Fördersystems, eines Strömungserzeugungssystem und einer Anpassungseinrichtung, wobei der Vereinzelungseinrichtung eine alternative Ausführungsvariante einer nur zum Teil gefüllten Aufnahmeeinheit zugeordnet ist,
- Figur 5B: eine schematische Darstellung gemäß der Figur 5A mit einer gefüllten Aufnahmeeinheit.

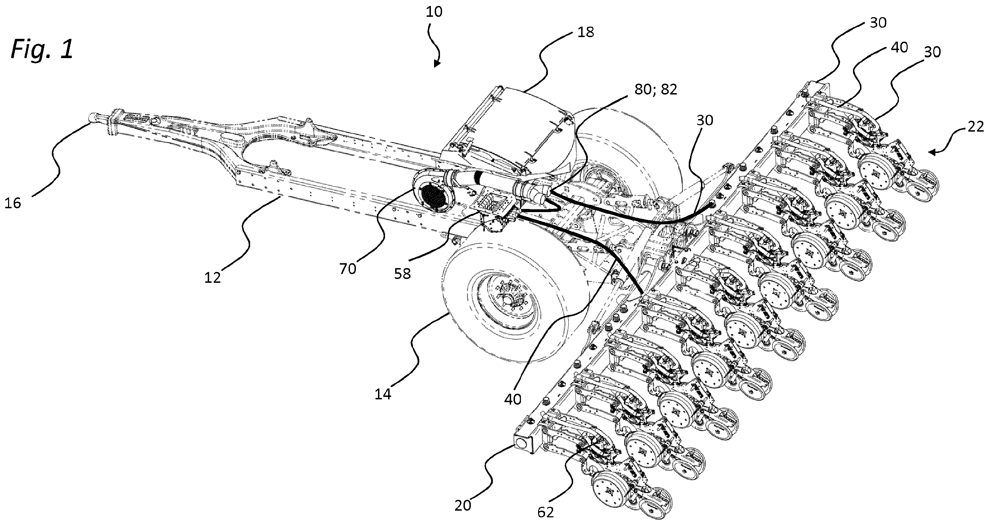

Die in den Figuren 1 bis 5 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße landwirtschaftliche Verteilmaschine und das erfindungsgemäße Verfahren ausgestaltet und ausgeführt sein können und stellen keine abschließende Begrenzung dar.

Figur 1 zeigt eine Perspektivansicht einer Ausführungsvariante einer erfindungsgemäßen landwirtschaftlichen Verteilmaschine 10. Die landwirtschaftliche Verteilmaschine 10 ist als eine Saatmaschine, respektive eine Einzelkornmaschine ausgeführt und dient zur Verteilung von granularem Verteilgut (z.B. Saatgut, Dünger und/oder dergl.) auf einer landwirtschaftlichen Fläche.

Die landwirtschaftliche Verteilmaschine 10, gemäß der Figur 1 kann insbesondere eingerichtet sein, ein Verfahren wie hierin beschrieben auszuführen.

Die Verteilmaschine 10 umfasst eine Rahmenkonstruktion 12 mit einem Fahrwerk 14 und einer Zugdeichsel 16 und ist als eine mittels eines Zugfahrzeug (hier nicht dargestellt) gezogene Verteilmaschine 10 ausgeführt. Die Verteilmaschine 10 könnte jedoch auch als eine selbstfahrende (bspw. auch autonom oder teilautonom) oder als eine an ein Zugfahrzeug anbaubare (z.B. mittels 3-Punkt) Maschine 10 ausgeführt sein.

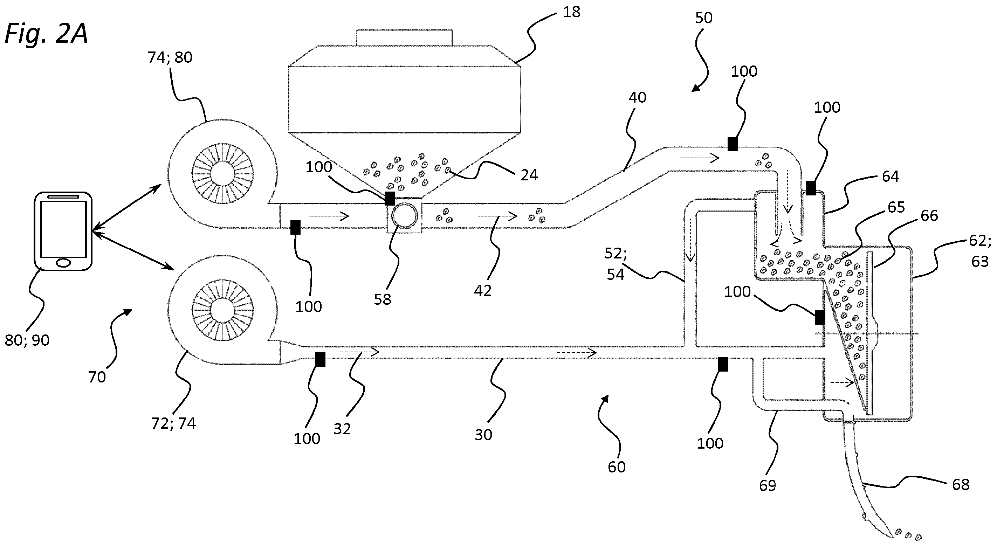

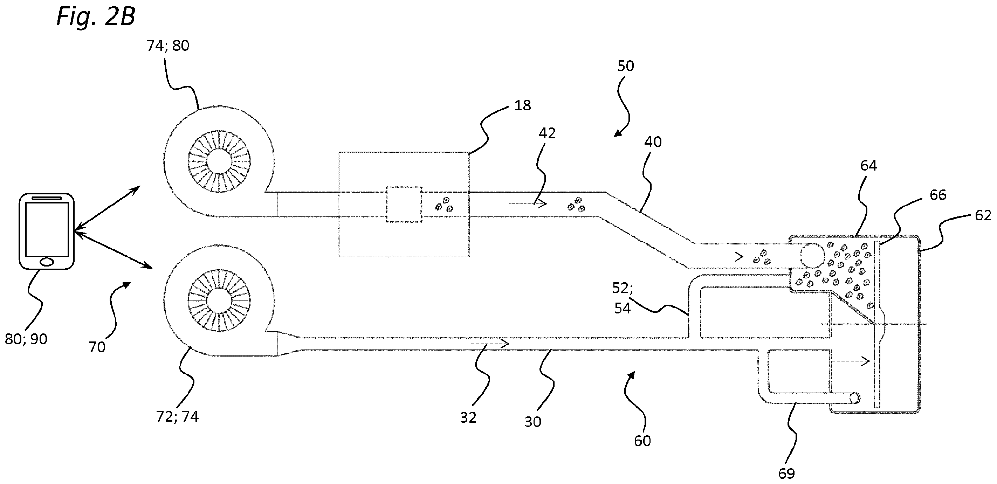

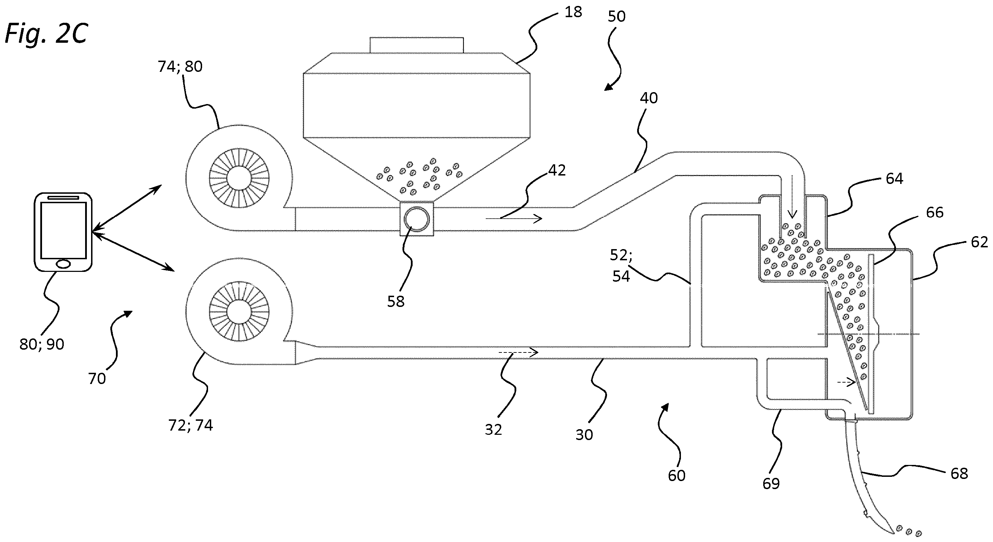

An der Rahmenkonstruktion 12 ist zudem ein zentraler Behälter 18 angeordnet welcher eingerichtet ist, das jeweilige granulare Verteilgut bereitzustellen. Wobei der Behälter 18 hierfür mit einem Fördersystem 50 (vergl. Figuren 2 bis 5) wie hierin beschrieben wirktechnisch verbunden ist.

Darüber hinaus ist an der Rahmenkonstruktion 12 eine Trägerkonstruktion 20 gelagert, mit einer Mehrzahl von an der Trägerkonstruktion 20 gelagerten Säscharen 22 mit jeweils zumindest einer Vereinzelungseinrichtung 62.

Es sei darauf hingewiesen, dass in den Figuren 2 bis 5 jeweils nur ein Fördersystem 50, ein Vereinzelungssystem 60 mit einer Vereinzelungseinrichtung 62, ein Strömungserzeugungssystem 70 und eine Anpassungseinrichtung 80 dargestellt sind, wobei an einer landwirtschaftlichen Verteilmaschine 10 auch eine Vielzahl derartiger Fördersysteme 50, Vereinzelungssysteme 60, Strömungserzeugungssysteme 70 und/oder Anpassungseinrichtungen 80 vorhanden sein können. Insbesondere können an einer landwirtschaftlichen Verteilmaschine 10 eine Vielzahl von Vereinzelungseinrichtungen 62 angebracht sein, vergl. hierzu Figur 1.

Es folgt zunächst eine Figurenbeschreibung, bzgl. dem grundlegenden Aufbau der landwirtschaftlichen Verteilmaschine 10 welche für alle Figuren 2 bis 5 gleichermaßen zutreffend ist.

Es sei noch darauf hingewiesen, dass in den Figuren 2 bis 5 jeweils lediglich eine Vereinzelungseinrichtung 62 dargestellt ist, der jeweils gezeigte Aufbau jedoch um weiteren Vereinzelungseinrichtungen 62 identisch erweitert werden kann, insbesondere beim Fördersystem 50 ab der Dosierbox 58 erweitert werden kann und beim Vereinzelungssystem 60 ab der Luftleitung 30 erweitert werden kann.

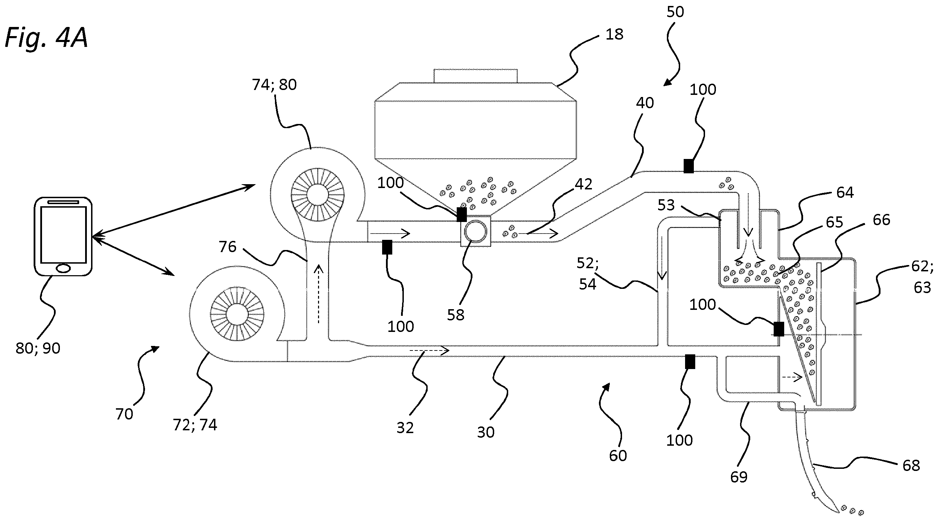

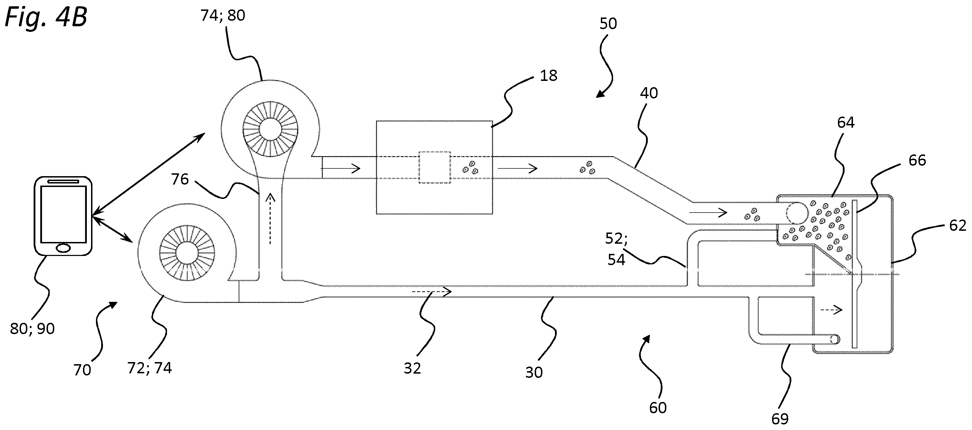

Die Figuren 2 bis 5 zeigen unterschiedliche schematische Darstellungen eines Vereinzelungssystems 60, eines Fördersystems 50, eines Strömungserzeugungssystems 70 und einer Anpassungseinrichtung 80, wobei der Vereinzelungseinrichtung 62 gemäß der Figur 2A, 4A, 5A eine nur zum Teil gefüllte Aufnahmeeinheit 64 zugeordnet ist und gemäß der Figur 2C, 4C, 5C eine gefüllte Aufnahmeeinheit 62 zugeordnet ist. Darüber hinaus zeigt die Figur 2B eine Draufsicht der schematischen Darstellung gemäß der Figur 2A, sowie die Figur 4B eine Draufsicht der schematischen Darstellung gemäß der Figur 4A.

Das Vereinzelungssystem 60 umfasst jeweils eine Vereinzelungseinrichtung 62, welche eingerichtet ist, granulares Verteilgut 24 mittels eines mit Druck beaufschlagten Vereinzelungsorgan 66 zu vereinzeln und auszugeben, gemäß der Ausführungsbeispiele mittels eines Saatrohr 68 auszugeben und so auf einer landwirtschaftlichen Fläche zu verteilen, respektive abzulegen. Die Vereinzelungseinrichtung 62 ist zweckmäßig als eine in bekannter Weise ausgeführte Differenzdruckbasierte (z.B. mittels Vakuums und/oder Überdruck) Vereinzelungseinrichtung 62 ausgeführt.

Die Vereinzelungseinrichtung 62 umfasst ein, das Vereinzelungsorgan 66 umgebendes Gehäuse 63, in welches Gehäuse 63 eine Luftleitung 30 mit einer Luftströmung 32 zur Druckbeaufschlagung des jeweiligen Vereinzelungsorgan 66 mündet, vorzugsweise zur Druckbeaufschlagung der Verteilgut 24 aufweisenden Seite des Vereinzelungsorgan 66 mündet. Auf der vom Verteilgut 24 abgewandten Seite des Vereinzelungsorgan 66 liegt zweckmäßig ein geringeres Druckniveau (z.B. der Atmosphärendruck, Vakuum) an, wodurch eine Druckdifferenz an den Öffnungen des Vereinzelungsorgan 66 erzeugt und Verteilgut 24 somit zweckmäßig vereinzelt und in Richtung zu einem Saatrohr 68 ausgegeben wird.

Wobei das Saatrohr 68 gemäß der Figuren 2 bis 4 mittels einer Schussleitung 69 mit einer Luftströmung beaufschlagt wird, wobei die Luftströmung von der Luftleitung 30 entsprechend abgezweigt wird. Durch diese Druckluftströmung wird das vereinzelte Verteilgut 24 mit erhöhter Geschwindigkeit durch das Saatrohr 68 gefördert.

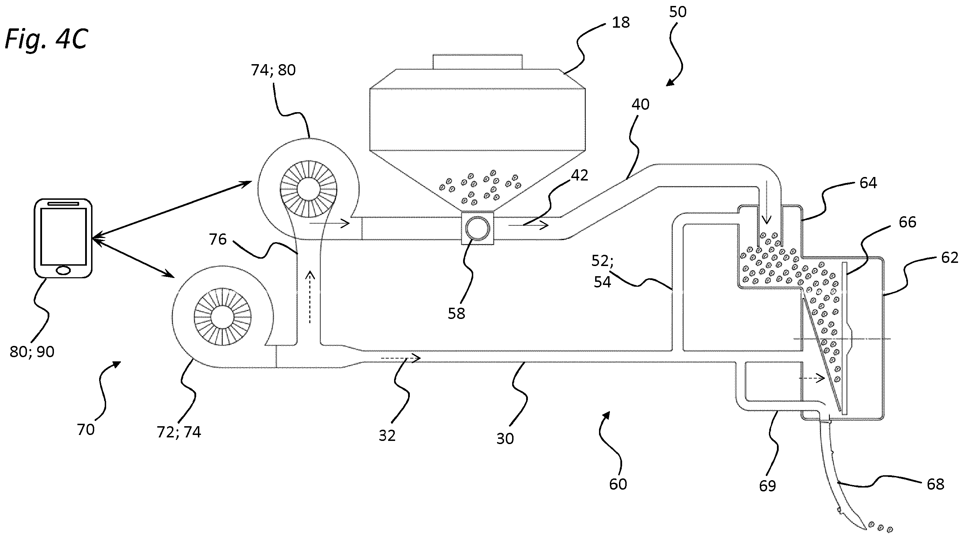

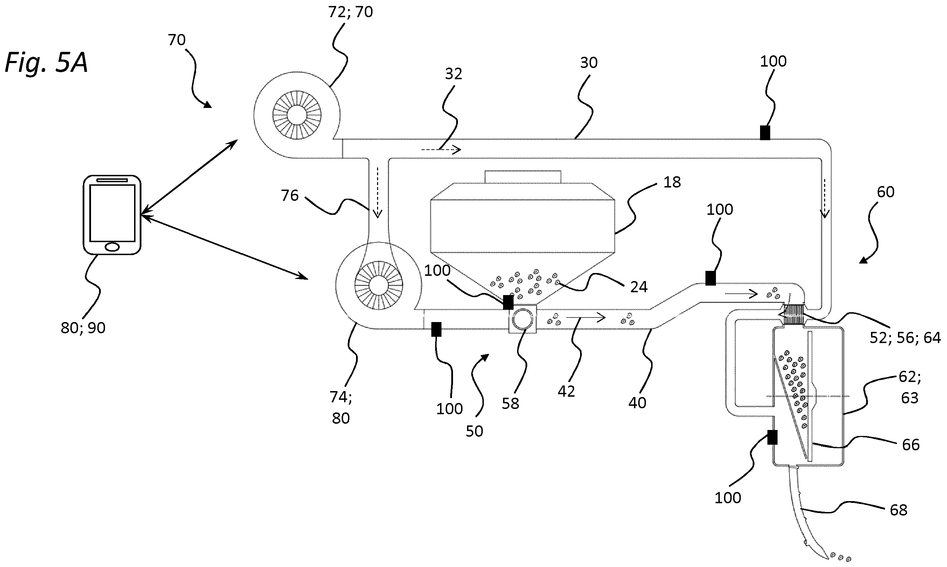

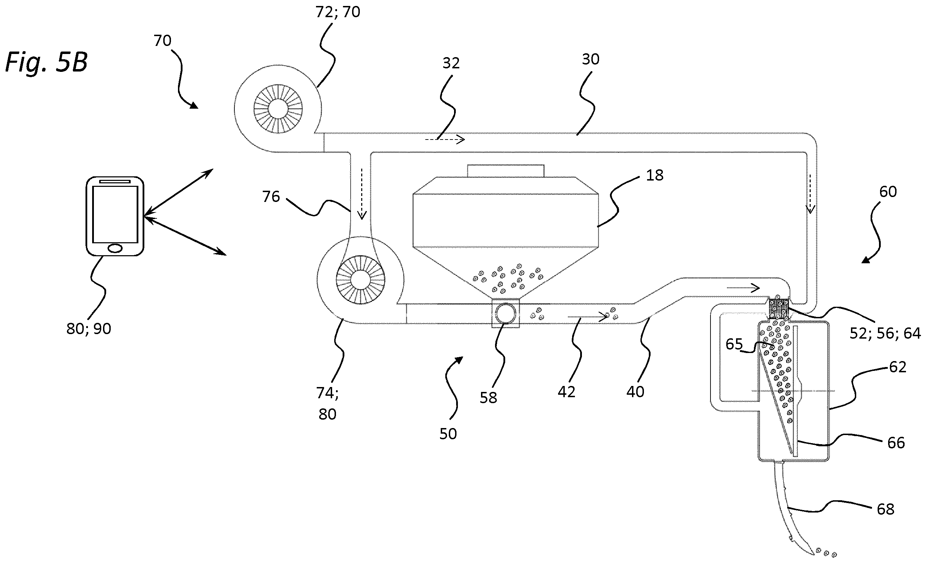

Gemäß der Figuren 5 wird zur Förderung des Verteilgut 24 mit erhöhter Geschwindigkeit durch das Saatrohr 68 der in der Vereinzelungseinrichtung 62 bzw. im Gehäuse 63 vorhandene Druck verwendet. Wobei die Ausführung gemäß der Figuren 2 und 4 auch im Ausführungsbeispiel der Figur 5 eingesetzt werden könnte und wobei die Ausführung gemäß der Figur 5 auch in den Ausführungsbeispielen der Figuren 2 bis 4 eingesetzt werden könnte.

Die Vereinzelungseinrichtung 62 ist mit einer Luftleitung 30 mit einer druckbeaufschlagenden Luftströmung 32 (schematisch durch gestrichelte Linien dargestellt) zur Druckbeaufschlagung des Vereinzelungsorgan 66 wirktechnisch verbunden.

Die Figuren 2 bis 5 zeigen zudem ein Fördersystem 50 zum Fördern von auszubringendem granularem Verteilgut 24. Wobei das Fördersystem 50 einen zentralen Behälter 18 aufweist, welcher Behälter 18 eingerichtet ist granulares Verteilgut 24 bereitzustellen und welcher Behälter 18 über jeweilige Zuführleitungen 40 mit den Vereinzelungseinrichtungen 62 wirktechnisch verbunden ist. Wobei die Zuführleitungen 40 eingerichtet sind, mit Hilfe einer jeweiligen Zuführluftströmung 42 (schematisch durch gepunktete Linien dargestellt) granulares Verteilgut 24 der jeweiligen Vereinzelungseinrichtung 62 zuzuführen.

Dem Fördersystem 50, respektive dem Behälter 18 ist eine Dosierbox 58 (z.B. ein oder mehrere Dosiergerät(e) und/oder ein oder mehrere sog. SOD-Box(en)) zur Übergabe von Verteilgut 24 aus dem Behälter 18 in die jeweilige Zuführleitung 40 zugeordnet.

Die Figuren 2 bis 5 zeigen zudem ein Strömungserzeugungssystem 70 welches eingerichtet ist, die Luftströmung 32 in der Luftleitung 30 zu erzeugen und welches eingerichtet ist, eine Zuführluftströmung 42 in der Zuführleitung 40 zu erzeugen.

Darüber hinaus weisen die Figuren 2 bis 5 jeweils eine Anpassungseinrichtung 80 auf, welche eingerichtet ist, eine Differenz, der durch die jeweilige Luftströmung 32 und/oder die jeweilige Zuführluftströmung 42 hervorgerufenen, Druckniveaus, vorzugsweise der statischen Druckniveaus, zwischen wenigstens einer Luftleitung 30 und einer Zuführleitung 40 zu beeinflussen, vorzugsweise zu steuern und/oder voreinzustellen.

Gemäß der Figuren 2 wird das Strömungserzeugungssystem 70 durch eine erste Antriebseinrichtung 72 und eine zweite Antriebseinrichtung 74 gebildet, wobei die erste Antriebseinrichtung 72 eingerichtet ist, die Luftströmung 32 zu erzeugen und die Luftleitung 30 mit der Luftströmung 32 zu beaufschlagen, und wobei die zweite Antriebseinrichtung 74 eingerichtet ist, die Zuführluftströmung 42 zu erzeugen und die Zuführleitung 40 mit der Zuführluftströmung 42 zu beaufschlagen.

Wobei es gemäß der Figuren 2 zudem möglich ist, dass das Strömungserzeugungssystem 70 durch eine erste Antriebseinrichtung 72 gebildet ist, welche eingerichtet ist, in der jeweiligen Luftleitung 30 eine Luftströmung 32 zu erzeugen und das die Anpassungseinrichtung 80 durch eine zweite Antriebseinrichtung 74 gebildet ist, welche eingerichtet ist, in der jeweiligen Zuführleitung 40 eine Zuführluftströmung 42 zu erzeugen, wobei die erste Antriebseinrichtung 72 und/oder die zweite Antriebseinrichtung 74 mittels einer die Anpassungseinrichtung 80 bildenden Steuereinrichtung 90, derartig beeinflussbar vorzugsweise steuerbar und/oder voreinstellbar sind, dass eine Differenz der Druckniveaus, vorzugsweise der statischen Druckniveaus, durch manuelle Vorgabe und/oder automatisiert erzeugt wird, insbesondere eine definierte und/oder definierbare Größe der Differenz der Druckniveaus, vorzugsweise der statischen Druckniveaus durch manuelle Vorgabe und/oder automatisiert erzeugt wird.

Gemäß der Figuren 4 und 5 ist vorgesehen, dass das Strömungserzeugungssystem 70 durch eine erste Antriebseinrichtung 72 gebildet ist und dass die Anpassungseinrichtung 80 durch eine zweite Antriebseinrichtung 74 gebildet ist, wobei die zweite Antriebseinrichtung 74 mit der ersten Antriebsreinrichtung 72 gekoppelt ist (z.B. mittels einer Koppelleitung 76) und dazu eingerichtet ist, um zumindest anteilig mit einer Luftströmung 32 der ersten Antriebseinrichtung 72 versorgt zu werden und eine Erhöhung eines Druckniveau, vorzugsweise eines statischen Druckniveau, in der Zuführleitung 40 durchzuführen.

Gemäß der Figuren 4 und 5 ist somit vorgesehen, dass die Anpassungseinrichtung 80 eingerichtet ist, eine Luftströmung 32 von zumindest einer Luftleitung 30 zu empfangen (z.B. zweckmäßig am Ansaugbereich zu empfangen), bspw. mittels einer Koppelleitung 76, und ein erhöhtes Druckniveau unter Erzeugung zumindest einer Zuführluftströmung 42 an die Zuführleitung 40 abzugeben, wodurch eine Differenz eines Druckniveaus zwischen der Luftleitung 30 und der Zuführleitung 40 erzeugt wird und somit zweckmäßig mittels der Anpassungseinrichtung 80 beeinflusst wird.

Entsprechend der Figuren 4 und 5 ist das Strömungserzeugungssystem 70 durch eine erste Antriebseinrichtung 72 gebildet und die Anpassungseinrichtung 80 durch eine zweite Antriebseinrichtung 74 gebildet, wobei die Anpassungseinrichtung 80 wirktechnisch in Reihe zur ersten Antriebseinrichtung 72 angeordnet ist.

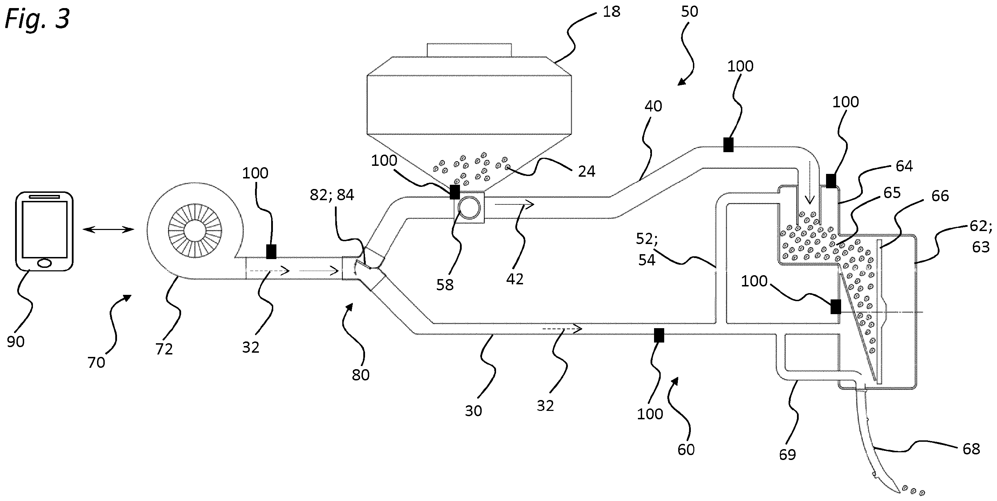

Gemäß der Figur 3 wird das Strömungserzeugungssystem 70 durch eine Antriebseinrichtung 72 gebildet, welche Antriebseinrichtung 72 eingerichtet ist, die Luftströmung 32 und die Zuführluftströmung 42 zu erzeugen und die Luftleitung 30 und die Zuführleitung 40 entsprechend mit der Luftströmung 32 und der Zuführluftströmung 42 zu beaufschlagen.

Gemäß der Figur 3 ist vorgesehen, dass die Anpassungseinrichtung 80 zweckmäßig durch eine Druckreduzierungseinrichtung 82 mit veränderbaren Querschnitten gebildet ist, welche dem Strömungserzeugungssystem 70 wirktechnisch nachgeordnet ist, aber alternativ oder ergänzend auch in der Luftleitung 30 angeordnet sein könnte. Wobei die Druckreduzierungseinrichtung 82 zweckmäßig eingerichtet ist, ein Druckniveau, vorzugsweise ein statisches Druckniveau in der Luftleitung 30 durch ein Beeinflussen, vorzugsweise ein Steuern und/oder ein Voreinstellen, zu reduzieren, vorzugsweise gegenüber der Zuführleitung 40 zu reduzieren. Wobei die Druckreduzierungseinrichtung 82 gemäß der Figur 3 hierfür ein, einen Querschnitt veränderndes Ventil 84 (z.B. Klappe, Weiche oder dergl.) aufweist, welches Ventil 84 alternativ oder ergänzend auch in der Luftleitung 30 angeordnet sein könnte.

Es wäre auch denkbar, dass die Anpassungseinrichtung 80 durch eine Druckreduzierungseinrichtung 82 gebildet ist, welche dem Strömungserzeugungssystem 70 wirktechnisch nachgeordnet ist und/oder zumindest einer Luftleitung 30 zugeordnet ist, wobei die Druckreduzierungseinrichtung 82 nicht veränderbare Querschnitte aufweisen könnte wodurch die mittels der Druckreduzierungseinrichtung 82 erzeugte Differenz des Druckniveau durch die geometrischen Querschnitte definiert werden kann.

Die Anpassungseinrichtung 80 kann mittels einer Stelleinrichtung beinflussbar, vorzugsweise steuerbar und/oder voreinstellbar sein. Das heißt, dass bspw. das Ventil 84 gemäß der Figur 3 mittels einer Stelleinrichtung beinflussbar, vorzugsweise steuerbar und/oder voreinstellbar sein kann, oder das bspw. gemäß der Figuren 2, 4 und 5 die erste Antriebseinrichtung 72 und/oder die zweite Antriebseinrichtung 74 mittels einer Stelleinrichtung beinflussbar, vorzugsweise steuerbar und/oder voreinstellbar sein kann/können.

Wie aus den Figuren 2 bis 5 zudem hervorgeht, ist dem Vereinzelungssystem 60 und dem Fördersystem 50 jeweils wenigstens eine Messeinrichtung 100 wirktechnisch zugeordnet. Wobei die Messeinrichtung 100 eingerichtet ist ein Druckniveau und/oder eine Luftströmung und/oder ein Zuführluftströmung (z.B. Strömungsgeschwindigkeit) im Vereinzelungssystem 60 und/oder im Fördersystem 50 zu erfassen und/oder einen Differenzdruck zwischen dem Vereinzelungssystem 60 und dem Fördersystem 50 zu erfassen. Zudem ist eine Steuereinrichtung 90 vorgesehen, welche eingerichtet ist, Stellsignale für die Stelleinrichtung anhand der mittels der Messeinrichtung 100 erfassten Druckniveaus und/oder Luftströmungen 32 und/oder Zuführluftströmung 42 und/oder Differenzdrücke derartig bereitzustellen, dass eine Differenz der Druckniveaus erzeugt wird, vorzugsweise eine definierte und/oder definierbare Größe der Differenz der Druckniveaus, vorzugsweise der statischen Druckniveaus erzeugt wird.

Wobei es auch denkbar wäre, dass die Anpassungseinrichtung 80 manuell beeinflussbar ist und die mittels der Messeinrichtung 100 erfassten Druckniveau und/oder Luftströmungen 32 und/oder Zuführluftströmungen 42 und/oder Druckdifferenzen zwischen dem Vereinzelungssystem 60 und dem Fördersystem 50 bspw. mittels einer Anzeigeeinrichtung angezeigt werden. Wobei wiederum die Steuereinrichtung 90 als Anzeigeeinrichtung ausgebildet sein kann, bzw. eine Anzeigeeinrichtung bilden kann.

Erfindungsgemäß ist es insbesondere möglich, dass der Dosierbox 58 eine Messeinrichtung 100 zugeordnet ist oder stromaufwärts zur Dosierbox eine Messeinrichtung 100 angeordnet ist.

Gemäß der Figuren 2 bis 5 ist an der jeweiligen Vereinzelungseinrichtung 62 eine Aufnahmeeinheit 64 zur Aufnahme des granularen Verteilgut 24 aus der jeweiligen Zuführleitung 40 zugeordnet. Wobei die Aufnahmeeinheit 64 zur zumindest teilweisen Trennung des Verteilgut 24 aus dem Zuführluftstrom 42 eingerichtet ist.

Die Aufnahmeeinheit 64 ist zudem mittels einer Verbindungseinrichtung 52 wirktechnisch mit der Luftleitung 30 gekoppelt. Wobei die Verbindungseinrichtung 52 gemäß der Figuren 2 bis 4 durch eine zusätzliche Leitung 54 gebildet ist und wobei die Verbindungseinrichtung 52 gemäß der Figur 5 durch ein, direkt an die Aufnahmeeinheit 64 angeschlossenes Lochgitter 56 (z.B. gebildet durch Ausschnitte, Bohrungen, Perforationen oder dergl.) gebildet ist.

Alternativ wäre es jedoch auch denkbar, dass die Aufnahmeeinheit 64 mittels einer Verbindungseinrichtung 52 wirktechnisch mit der Luftleitung 30 gekoppelt ist, vorzugsweise verbunden ist und dass die Aufnahmeeinheit 64 eingerichtet ist, die jeweilige Zuführluftströmung 42 anteilig in Richtung des Vereinzelungsorgan 66 zu leiten und anteilig mittels der Verbindungseinrichtung 52 in Richtung der Luftleitung 30 zu leiten, vorzugsweise derartig, dass zumindest nahezu keine Zuführluftströmung 42 unmittelbar aus der Aufnahmeeinheit 64 in die Atmosphäre abgegeben wird.

Die Aufnahmeeinheit 64 ist zudem eingerichtet, die jeweilige Zuführluftströmung 42 anteilig durch einen Verteilgutvorrat 65 in Richtung des Vereinzelungsorgan 66 zu leiten und anteilig mittels der Verbindungseinrichtung 52 in Richtung der Luftleitung 30 zu leiten. Wobei ein anteiliges Leiten mittels der Verbindungseinrichtung 52 in Richtung der Druckluftleitung 30 nur erfolgt, wenn der Füllstand des granularen Verteilgut 24 in der Aufnahmeeinheit 64 einen entsprechenden Füllgrad nicht übersteigt, vergleiche hierzu Figur 2A mit 2C oder 4A mit 4C oder 5A mit 5B, das heißt, dass der Füllgrad derartig ist, dass die Zuführluftströmung 42 aus der Zuführleitung 40 entweichen kann.

Wie aus den Ausführungsbeispielen zudem hervorgeht, erfolgt ein anteiliges Leiten in Richtung des Vereinzelungsorgan 66 und in Richtung der Luftleitung 30 vorzugsweise derartig, dass zumindest nahezu keine Zuführluftströmung 42 unmittelbar aus der Aufnahmeeinheit 64 in die Atmosphäre (d.h. Umgebung) abgegeben wird, insbesondere lediglich durch die Vereinzelungseinrichtung 62 in die Atmosphäre abgegeben wird.

Um ein ungewolltes Austreten von Verteilgut 24 durch die Verbindungseinrichtung 52 zu verhindern kann dieses mit einem Gitter 52 ausgestattet sein, vergl. Figur 4A.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste:

| | | | |
|---|---|---|---|
| 10 | Verteilmaschine | 60 | Vereinzelungssystem |
| 12 | Rahmenkonstruktion | 62 | Vereinzelungseinrichtung |
| 14 | Fahrwerk | 63 | Gehäuse |
| 16 | Zugdeichsel | 64 | Aufnahmeeinheit |
| 18 | Behälter | 65 | Verteilgutvorrat |
| 20 | Trägerstruktur | 66 | Vereinzelungsorgan |
| 22 | Säschar | 68 | Saatrohr |
| 24 | Verteilgut | 69 | Schussleitung |
| 30 | Luftleitung | 70 | Strömungserzeugungssystem |
| 32 | Luftströmung | 72 | Antriebseinrichtung; erste Antriebseinrichtung |
| 40 | Zuführleitung | | |
| 42 | Zuführluftstrom | 74 | zweite Antriebseinrichtung |
| 50 | Fördersystem | 76 | Koppelleitung |
| 52 | Verbindungseinrichtung | 80 | Druckanpassungseinrichtung |
| 53 | Gitter | 82 | Druckreduzierungseinrichtung |
| 54 | Leitung | 84 | Ventil |
| 56 | Lochgitter | 90 | Steuereinrichtung |
| 58 | Dosierbox | 100 | Messeinrichtung |

## Patentansprüche

1. Verfahren zum Betreiben einer landwirtschaftlichen Verteilmaschine (10), zur Verteilung von granularem Verteilgut (24), aufweisend:
- Bereitstellen eines Vereinzelungssystem (60), mit zumindest zwei Vereinzelungseinrichtungen (62), welche Vereinzelungseinrichtungen (62) eingerichtet sind, granulares Verteilgut (24) mittels eines mit Druck beaufschlagten Vereinzelungsorgan (66) zu vereinzeln und auszugeben, wobei die Vereinzelungseinrichtungen (62) mit einer Luftleitung (30) mit einer Luftströmung (32) zur Druckbeaufschlagung des jeweiligen Vereinzelungsorgan (66) wirktechnisch verbunden sind,
- Bereitstellen eines Fördersystem (50) zum Fördern von granularem Verteilgut (24), wobei das Fördersystem (50) wenigstens einen zentralen Behälter (18) aufweist, welcher Behälter (18) eingerichtet ist granulares Verteilgut (24) bereitzustellen und welcher Behälter (18) über Zuführleitungen (40) mit den Vereinzelungseinrichtungen (62) wirktechnisch verbunden ist, wobei die Zuführleitungen (40) eingerichtet sind, mit Hilfe einer Zuführluftströmung (42) granulares Verteilgut (24) der jeweiligen Vereinzelungseinrichtung (62) zuzuführen,
- Bereitstellen eines Strömungserzeugungssystem (70), welches eingerichtet ist, die Luftströmung (32) und/oder die Zuführluftströmung (42) zu erzeugen,
- Beeinflussen, vorzugsweise ein steuern und/oder voreinstellen einer Differenz, der durch die jeweilige Luftströmung (32) und/oder die jeweilige Zuführluftströmung (42) hervorgerufenen, Druckniveaus, nämlich der statischen Druckniveaus, zwischen wenigstens einer Luftleitung (30) und einer Zuführleitung (40) mittels einer Anpassungseinrichtung (80),
- wobei zur jeweiligen Sicherstellung der Luftströmung (32) und der Zuführluftströmung (42) vorgesehen ist, dass eine mittels der Anpassungseinrichtung (80) erzeugte Differenz des Druckniveau, nämlich des statischen Druckniveau zwischen der Luftleitung (30) und der Zuführleitung (40) ausschließlich innerhalb eines Schwellenwertbereich veränderbar ist,
- wobei das Strömungserzeugungssystem (70) durch eine erste Antriebseinrichtung (72) gebildet ist, welche eingerichtet ist, in der Luftleitung (30) eine Luftströmung (31) zu erzeugen,
- wobei das Strömungserzeugungssystem (70) durch eine zweite Antriebseinrichtung (74) gebildet ist, welche eingerichtet ist, in der Zuführleitung (40) eine Zuführluftströmung (42) zu erzeugen,
- wobei die erste Antriebseinrichtung (72) und/oder die zweite Antriebseinrichtung (74) mittels einer die Anpassungseinrichtung (80) bildenden Steuereinrichtung (90), derartig beeinflusst vorzugsweise gesteuert und/oder voreingestellt werden,
- dass eine Aktivierung der zweiten Antriebseinrichtung (74) zeitgleich oder vor der ersten Antriebseinrichtung (72) erfolgt und dass eine Deaktivierung der zweiten Antriebsvorrichtung (74) zeitgleich oder nach der ersten Antriebseinrichtung (72) erfolgt, und
- wobei ein beeinflussen, vorzugsweise ein steuern und/oder voreinstellen der Differenz der Druckniveaus, nämlich der statischen Druckniveaus mittels der Anpassungseinrichtung (80) derartig erfolgt, dass in der Zuführleitung (40) ein Höheres statisches Druckniveau als in der Luftleitung (30) vorhanden ist, vorzugsweise dauerhaft vorhanden ist.

2. Verfahren nach Anspruch 1, **dadurch gekennzeichnet, dass**
- das Strömungserzeugungssystem (70) durch eine erste Antriebseinrichtung (72) gebildet ist, welche eingerichtet ist, in der Luftleitung (30) eine Luftströmung (31) zu erzeugen,
- und dass das Strömungserzeugungssystem (70) durch eine zweite Antriebseinrichtung (74) gebildet ist, welche eingerichtet ist, in der Zuführleitung (40) eine Zuführluftströmung (42) zu erzeugen,
- wobei die erste Antriebseinrichtung (72) und/oder die zweite Antriebseinrichtung (74) mittels einer, die Anpassungseinrichtung (80) bildenden, Steuereinrichtung (90), derartig beeinflussbar, vorzugsweise steuerbar und/oder voreinstellbar sind,
- dass eine Differenz der Druckniveaus, nämlich der statischen Druckniveaus, durch manuelle Vorgabe und/oder automatisiert erzeugt wird.

3. Verfahren nach einem der vorhergehenden Ansprüche, **dadurch gekennzeichnet, dass** die Anpassungseinrichtung (80) eingerichtet ist, eine Luftströmung (32) von zumindest einer Luftleitung (30) zu empfangen und ein erhöhtes Druckniveau unter Erzeugung zumindest eines Zuführluftströmung (42) an die Zuführleitung (40) abzugeben, wodurch eine Differenz der Druckniveaus, nämlich der statischen Druckniveaus zwischen wenigstens einer Luftleitung (30) und der Zuführleitung (40) erzeugt wird.

4. Verfahren nach einem der vorhergehenden Ansprüche, **dadurch gekennzeichnet, dass** das Strömungserzeugungssystem (70) durch eine erste Antriebseinrichtung (72) gebildet ist und dass die Anpassungseinrichtung (80) durch eine zweite Antriebseinrichtung (74) gebildet ist, wobei die Anpassungseinrichtung (80) wirktechnisch in Reihe zur ersten Antriebseinrichtung (72) angeordnet ist.

5. Verfahren nach einem der vorhergehenden Ansprüche, **dadurch gekennzeichnet, dass** die Anpassungseinrichtung (80) durch eine Druckreduzierungseinrichtung (82) gebildet ist, welche dem Strömungserzeugungssystem (70) wirktechnisch nachgeordnet ist und/oder zumindest einer Luftleitung (30) zugeordnet ist, wobei die Druckreduzierungseinrichtung (82) eingerichtet ist, ein Druckniveau, nämlich ein statisches Druckniveau, in der Luftleitung (30) durch ein beeinflussen, vorzugsweise ein steuern und/oder ein voreinstellen, zu reduzieren.

6. Verfahren nach einem der vorhergehenden Ansprüche, **dadurch gekennzeichnet, dass** die Anpassungseinrichtung (80) durch eine Druckreduzierungseinrichtung (82) gebildet ist, welche dem Strömungserzeugungssystem (70) wirktechnisch nachgeordnet ist und/oder zumindest einer Luftleitung (30) zugeordnet ist, wobei die Druckreduzierungseinrichtung (82) nicht veränderbare Querschnitte aufweist, wodurch die mittels der Druckreduzierungseinrichtung (82) erzeugte Differenz des Druckniveau durch die geometrischen Querschnitte definiert ist.

7. Verfahren nach einem der vorhergehenden Ansprüche, **dadurch gekennzeichnet, dass**
- zum Beeinflussen, vorzugsweise zum Steuern und/oder zum Voreinstellen, der Anpassungseinrichtung (80) eine Stelleinrichtung zugeordnet ist und dass zumindest dem Vereinzelungssystem (60) und/oder dem Fördersystem (50) eine Messeinrichtung (100) wirktechnisch zugeordnet ist,
- wobei die Messeinrichtung (100) eingerichtet ist, ein Druckniveau und/oder eine Luftströmung (32) und/oder eine Zuführluftströmung (42) im Vereinzelungssystem (60) und/oder im Fördersystem (50) zu erfassen und/oder einen Differenzdruck zwischen dem Vereinzelungssystem (60) und dem Fördersystem (50) zu erfassen und
- dass eine Steuereinrichtung (90) vorgesehen ist, welche eingerichtet ist, Stellsignale für die Stelleinrichtung anhand der mittels der Messeinrichtung (100) erfassten Druckniveaus und/oder Luftströmungen (32) und/oder Zuführluftströmung (42) und/oder Differenzdrücken derartig bereitzustellen, dass eine Differenz der Druckniveaus erzeugt wird, vorzugsweise eine definierte und/oder definierbare Größe der Differenz der Druckniveaus, nämlich der statischen Druckniveaus erzeugt wird.

8. Verfahren nach einem der vorhergehenden Ansprüche, **dadurch gekennzeichnet, dass**
- zum Beeinflussen, vorzugsweise zum Steuern und/oder zum Voreinstellen, die Anpassungseinrichtung (80) manuell verstellbar ist und dass zumindest dem Vereinzelungssystem (60) und/oder dem Fördersystem (50) eine Messeinrichtung (100) wirktechnisch zugeordnet ist,
- wobei die Messeinrichtung (100) eingerichtet ist, ein Druckniveau und/oder eine Luftströmung und/oder eine Zuführluftströmung und/oder einen Differenzdruck zwischen dem Vereinzelungssystem (60) und/oder im Fördersystem (50) zu erfassen und
- dass eine Anzeigeeinrichtung vorhanden ist welche eingerichtet ist, ein jeweiliges Druckniveau und/oder eine jeweilige Luftströmung (32) und/oder Zuführluftströmung (42) anzuzeigen und/oder eine Druckdifferenz zwischen dem Vereinzelungssystem (60) und dem Fördersystem (50) anzuzeigen, vorzugsweise zwischen wenigstens einer Luftleitung (30) und einer Zuführleitung (40) anzuzeigen.

9. Verfahren nach einem der vorhergehenden Ansprüche, **dadurch gekennzeichnet, dass** an der jeweiligen Vereinzelungseinrichtung (62) eine Aufnahmeeinheit (64) zur Aufnahme des granularen Verteilgut (24) aus der jeweiligen Zuführleitung (40) zugeordnet ist, wobei die Aufnahmeeinheit (64) zur zumindest teilweisen Trennung des granularen Verteilgut (24) aus der Zuführluftströmung (42) eingerichtet ist.

10. Verfahren nach Anspruch 9, **dadurch gekennzeichnet, dass** die Aufnahmeeinheit (64) mittels einer Verbindungseinrichtung (52) wirktechnisch mit der Luftleitung (30) gekoppelt ist, vorzugsweise verbunden ist und dass die Aufnahmeeinheit (64) eingerichtet ist, die jeweilige Zuführluftströmung (42) anteilig in Richtung des Vereinzelungsorgan (66) zu leiten und anteilig mittels der Verbindungseinrichtung (52) in Richtung der Luftleitung (30) zu leiten, vorzugsweise derartig, dass zumindest nahezu keine Zuführluftströmung (42) unmittelbar aus der Aufnahmeeinheit (64) in die Atmosphäre abgegeben wird.

11. Verfahren nach einem der Ansprüche 9 bis 10, **dadurch gekennzeichnet, dass** die Aufnahmeeinheit (64) mittels einer Verbindungseinrichtung (52) wirktechnisch mit dem Vereinzelungsorgan (66) gekoppelt ist, vorzugsweise verbunden ist und dass die Aufnahmeeinheit (64) eingerichtet ist, die jeweilige Zuführluftströmung (42) anteilig vorzugsweise durch einen Verteilgutvorrat (65) in Richtung des Vereinzelungsorgan (66) zu leiten und/oder anteilig mittels der Verbindungseinrichtung (52) in Richtung des Vereinzelungsorgan (66) zu leiten, vorzugsweise derartig, dass zumindest nahezu keine Zuführluftströmung (42) unmittelbar aus der Aufnahmeeinheit (64) in die Atmosphäre abgegeben wird.

12. Verfahren nach einem der vorhergehenden Ansprüche, **dadurch gekennzeichnet, dass**
- zum Beeinflussen, vorzugsweise zum Steuern und/oder zum Voreinstellen, der Anpassungseinrichtung (80) eine Stelleinrichtung zugeordnet ist und das eine Steuereinrichtung (90) vorgesehen ist, welche eingerichtet ist, Stellsignale für die Stelleinrichtung anhand einer Vorgabe der Größe der Differenz des Druckniveau, nämlich anhand einer Vorgabe der Größe der Differenz des statischen Druckniveau, bereitzustellen, wobei eine Vorgabe der Druckdifferenz nach zumindest einem von folgendem erfolgt,
- manuell durch eine Benutzereingabe und/oder
- anhand einer Sorte des granularen Verteilgut (24) und/oder
- anhand flächenbezogener Eigenschaften und/oder
- anhand maschinenspezifischer Eigenschaften.

## Claims

1. Method for operating an agricultural distribution machine (10) for distributing granular distribution material (24), comprising:
- providing a singularization system (60) with at least two singularization devices (62), which singularization devices (62) are specified to singularize and deliver granular distribution material (24) by means of a pressurized separating member (66), wherein the singularization devices (62) are operatively connected to an air line (30) with an air flow (32) for pressurizing the respective separating member (66),
- providing a conveying system (50) for conveying granular distribution material (24), wherein the conveying system (50) has at least one central container (18), which container (18) is specified to provide granular distribution material (24) and which container (18) is operatively connected to the singularization devices (62) by way of supply lines (40), wherein the supply lines (40) are specified to feed granular distribution material (24) to the respective singularization device (62) with the aid of a supply air flow (42),
- providing a flow generation system (70) which is specified to generate the air flow (32) and/or the supply air flow (42),
- influencing, preferably controlling and/or pre-setting, a difference in the pressure levels caused by the respective air flow (32) and/or the respective supply air flow (42), specifically in the static pressure levels, between at least one air line (30) and a supply line (40) by means of an adjustment device (80),
- wherein, in order to ensure the air flow (32) and the supply air flow (42) respectively, it is provided that a difference in the pressure level, specifically in the static pressure level, between the air line (30) and the supply line (40) generated by means of the adjustment device (80) is variable exclusively within a threshold range,
- wherein the flow generation system (70) is formed by a first drive device (72) which is specified to generate an air flow (31) in the air line (30),
- wherein the flow generation system (70) is formed by a second drive device (74) which is specified to generate a supply air flow (42) in the supply line (40),
- wherein the first drive device (72) and/or the second drive device (74) are influenced, preferably controlled and/or pre-set, by means of a control device (90) forming the adjustment device (80) in such a manner
- that activation of the second drive device (74) takes place simultaneously with or before that of the first drive device (72), and that deactivation of the second drive device (74) takes place simultaneously with or after that of the first drive device (72), and
- wherein influencing, preferably controlling and/or pre-setting, the difference in the pressure levels, specifically in the static pressure levels, by means of the adjustment device (80) takes place in such a manner that a higher static pressure level is, preferably permanently, present in the supply line (40) than in the air line (30).

2. Method according to Claim 1, **characterized in that**
- the flow generation system (70) is formed by a first drive device (72) which is specified to generate an air flow (31) in the air line (30),
- and **in that** the flow generation system (70) is formed by a second drive device (74) which is specified to generate a supply air flow (42) in the supply line (40),
- wherein the first drive device (72) and/or the second drive device (74) are able to be influenced, preferably controlled and/or pre-set, by means of a control device (90) forming the adjustment device (80) in such a manner
- that a difference in the pressure levels, specifically in the static pressure levels, is generated by manual specification and/or in an automated manner.

3. Method according to one of the preceding claims, **characterized in that** the adjustment device (80) is specified to receive an air flow (32) from at least one air line (30) and to deliver an increased pressure level while generating at least one supply air flow (42) to the supply line (40), as a result of which a difference in the pressure levels, specifically in the static pressure levels, between at least one air line (30) and the supply line (40) is generated.

4. Method according to one of the preceding claims, **characterized in that** the flow generation system (70) is formed by a first drive device (72) and **in that** the adjustment device (80) is formed by a second drive device (74), wherein the adjustment device (80) is operatively disposed in series with the first drive device (72).

5. Method according to one of the preceding claims, **characterized in that** the adjustment device (80) is formed by a pressure reduction device (82) which is operatively disposed downstream of the flow generation system (70) and/or is assigned to at least one air line (30), wherein the pressure reduction device (82) is specified to reduce a pressure level, specifically a static pressure level, in the air line (30) by influencing, preferably controlling and/or pre-setting, the latter.

6. Method according to one of the preceding claims, **characterized in that** the adjustment device (80) is formed by a pressure reduction device (82) which is operatively disposed downstream of the flow generation system (70) and/or is assigned to at least one air line (30), wherein the pressure reduction device (82) has nonvariable cross sections, as a result of which the difference in the pressure level generated by means of the pressure reduction device (82) is defined by the geometric cross sections.

7. Method according to one of the preceding claims, **characterized in that**
- for influencing, preferably for controlling and/or for pre-setting, the adjustment device (80) there is assigned an actuating device, and **in that** at least the singularization system (60) and/or the conveying system (50) are/is operatively assigned a measuring device (100),
- wherein the measuring device (100) is specified to detect a pressure level and/or an air flow (32) and/or a supply air flow (42) in the singularization system (60) and/or in the conveying system (50), and/or to detect a differential pressure between the singularization system (60) and the conveying system (50), and
- **in that** provided is a control device (90) which is specified to provide actuating signals for the actuating device based on the pressure levels and/or air flows (32) and/or supply air flow (42) and/or differential pressures detected by means of the measuring device (100) such that a difference in the pressure levels is generated, preferably a defined and/or definable size of the difference in the pressure levels, specifically in the static pressure levels, is generated.

8. Method according to one of the preceding claims, **characterized in that**
- for influencing, preferably for controlling and/or for pre-setting, the adjustment device (80) is manually adjustable, and **in that** at least the singularization system (60) and/or the conveying system (50) are/is operatively assigned a measuring device (100),
- wherein the measuring device (100) is specified to detect a pressure level and/or an air flow and/or a supply air flow and/or a differential pressure between the singularization system (60) and/or in the conveying system (50), and
- **in that** a display device is present, which is specified to indicate a respective pressure level and/or a respective air flow (32) and/or supply air flow (42) and/or to display a pressure difference between the singularization system (60) and the conveying system (50), preferably between at least one air line (30) and a supply line (40).

9. Method according to one of the preceding claims, **characterized in that** the respective singularization device (62) is assigned a receptacle unit (64) for receiving the granular distribution material (24) from the respective supply line (40), wherein the receptacle unit (64) is specified to at least partially separate the granular distribution material (24) from the supply air flow (42).

10. Method according to Claim 9, **characterized in that** the receptacle unit (64) by means of a connection device (52) is operatively coupled, preferably connected, to the air line (30), and **in that** the receptacle unit (64) is specified to direct the respective supply air flow (42) proportionately in the direction of the separating member (66) and proportionately by means of the connection device (52) in the direction of the air line (30), preferably in such a manner that at least almost no supply air flow (42) is discharged directly from the receptacle unit (64) into the atmosphere.

11. Method according to either of Claims 9 and 10, **characterized in that** the receptacle unit (64) by means of a connection device (52) is operatively coupled, preferably connected, to the separating member (66), and **in that** the receptacle unit (64) is specified to direct the respective supply air flow (42) proportionately preferably through a distribution material supply (65) in the direction of the separating member (66) and/or proportionately by means of the connection device (52) in the direction of the separating member (66), preferably such that at least almost no supply air flow (42) is discharged directly from the receptacle unit (64) into the atmosphere.

12. Method according to one of the preceding claims, **characterized in that**
- for influencing, preferably for controlling and/or for pre-setting, the adjustment device (80) there is assigned an actuating device, and **in that** provided is a control device (90) which is specified to provide actuating signals for the actuating device based on a specification of the size of the difference in the pressure level, namely based on a specification of the size of the difference in the static pressure level, wherein a specification of the pressure difference is made according to at least one of the following,
- manually by a user input and/or
- based on a type of granular distribution material (24) and/or
- based on area-related characteristics and/or
- based on machine-specific properties.

## Revendications

1. Procédé destiné à faire fonctionner une machine agricole d'épandage (10) destinée à épandre un produit granulaire à épandre (24), comprenant :
- fourniture d'un système de séparation (60) avec au moins deux dispositifs de séparation (62), lesquels dispositifs de séparation (62) sont mis au point pour séparer et distribuer le matériau granulaire à épandre (24) au moyen d'un organe de séparation (66) soumis à l'action d'une pression, les dispositifs de séparation (62) étant raccordés fonctionnellement à une conduite d'air (30) avec un flux d'air (32) pour soumettre l'organe de séparation (66) respectif à l'action d'une pression,
- fourniture d'un système de transport (50) pour le transport de produit granulaire à épandre (24), le système de transport (50) comportant au moins un récipient central (18), lequel récipient (18) est mis au point pour fournir du produit granulaire à épandre (24) et lequel récipient (18) est raccordé fonctionnellement aux dispositifs de séparation (62) par des conduites d'alimentation (40), les conduites d'alimentation (40) étant mises au point pour amener du produit granulaire à épandre (24) au dispositif de séparation (62) respectif à l'aide d'un flux d'air d'alimentation (42),
- fourniture d'un système de génération de flux (70) qui est mis au point pour générer le flux d'air (32) et/ou le flux d'air d'alimentation (42),
- influence, de préférence commande et/ou préréglage, d'une différence des niveaux de pression provoqués par le flux d'air (32) respectif et/ou le flux d'air d'alimentation (42) respectif, à savoir des niveaux de pression statique, entre au moins une conduite d'air (30) et une conduite d'alimentation (40) au moyen d'un dispositif d'adaptation (80),
- la possibilité de faire varier une différence du niveau de pression, à savoir du niveau de pression statique entre la conduite d'air (30) et la conduite d'alimentation (40), produite au moyen du dispositif d'adaptation (80), exclusivement dans une plage de valeurs de seuil, étant prévue pour assurer respectivement le flux d'air (32) et le flux d'air d'alimentation (42),
- le système de production de flux (70) étant formé par un premier dispositif d'entraînement (72), qui est mis au point pour produire un flux d'air (31) dans la conduite d'air (30),
- le système de production de flux (70) étant formé par un deuxième dispositif d'entraînement (74), qui est mis au point pour produire un flux d'air d'alimentation (42) dans la conduite d'alimentation (40),
- le premier dispositif d'entraînement (72) et/ou le deuxième dispositif d'entraînement (74) étant influencés, de préférence commandés et/ou préréglés, au moyen d'un dispositif de commande (90) formant le dispositif d'adaptation (80) de telle manière
- que le deuxième dispositif d'entraînement (74) est activé simultanément ou avant le premier dispositif d'entraînement (72) et que le deuxième dispositif d'entraînement (74) est désactivé simultanément ou après le premier dispositif d'entraînement (72), et
- la différence entre les niveaux de pression, à savoir les niveaux de pression statique, étant influencée, de préférence commandée et/ou préréglée au moyen du dispositif d'adaptation (80) de telle manière qu'un niveau de pression statique plus élevé que dans la conduite d'air (30) est présent, de préférence est présent durablement, dans la conduite d'alimentation (40).

2. Procédé selon la revendication 1, **caractérisé en ce que**
- le système de production de flux (70) est formé par un premier dispositif d'entraînement (72), qui est mis au point pour produire un flux d'air (31) dans la conduite d'air (30),
- et que le système de production de flux (70) est formé par un deuxième dispositif d'entraînement (74), qui est mis au point pour produire un flux d'air d'alimentation (42) dans la conduite d'alimentation (40),
- le premier dispositif d'entraînement (72) et/ou le deuxième dispositif d'entraînement (74) pouvant être influencés, de préférence commandés et/ou préréglés, au moyen d'un dispositif de commande (90) formant le dispositif d'adaptation (80),
- qu'une différence des niveaux de pression, à savoir des niveaux de pression statique, est produite par spécification manuelle et/ou de manière automatisée.

3. Procédé selon l'une des revendications précédentes, **caractérisé en ce que** le dispositif d'adaptation (80) est mis au point pour recevoir un flux d'air (32) d'au moins une conduite d'air (30) et pour délivrer un niveau de pression élevé à la conduite d'alimentation (40) en produisant au moins un flux d'air d'alimentation (42), ce qui produit une différence des niveaux de pression, à savoir des niveaux de pression statique entre au moins une conduite d'air (30) et la conduite d'alimentation (40).

4. Procédé selon l'une des revendications précédentes, **caractérisé en ce que** le système de production de flux (70) est formé par un premier dispositif d'entraînement (72) et que le dispositif d'adaptation (80) est formé par un deuxième dispositif d'entraînement (74), le dispositif d'adaptation (80) étant disposé fonctionnellement en série avec le premier dispositif d'entraînement (72) en fonctionnement.

5. Procédé selon l'une des revendications précédentes, **caractérisé en ce que** le dispositif d'adaptation (80) est formé par un dispositif de réduction de pression (82), qui est disposé fonctionnellement en aval du système de production de flux (70) et/ou est associé au moins à une conduite d'air (30), le dispositif de réduction de pression (82) étant mis au point pour réduire, en l'influençant, de préférence en le commandant et/ou le préréglant, un niveau de pression, à savoir un niveau de pression statique, dans la conduite d'air (30).

6. Procédé selon l'une des revendications précédentes, **caractérisé en ce que** le dispositif d'adaptation (80) est formé par un dispositif de réduction de pression (82), qui est disposé fonctionnellement en aval du système de production de flux (70) et/ou est associé au moins à une conduite d'air (30), le dispositif de réduction de pression (82) comportant des sections transversales non modifiables, ce qui permet de définir par les sections transversales géométriques la différence du niveau de pression produite par le dispositif de réduction de pression (82).

7. Procédé selon l'une des revendications précédentes, **caractérisé en ce que**
- un dispositif de réglage est associé au dispositif d'adaptation (80) pour influencer, de préférence pour commander et/ou prérégler, et qu'un dispositif de mesure (100) est associé fonctionnellement au moins au système de séparation (60) et/ou au système de transport (50),
- le dispositif de mesure (100) étant mis au point pour détecter un niveau de pression et/ou un flux d'air (32) et/ou un flux d'air d'alimentation (42) dans le système de séparation (60) et/ou dans le système de transport (50) et/ou pour détecter une pression différentielle entre le système de séparation (60) et le système de transport (50)
- un dispositif de commande (90) est prévu, lequel est mis au point pour fournir des signaux de réglage pour le dispositif de réglage à l'aide des niveaux de pression et/ou des flux d'air (32) et/ou du flux d'air d'alimentation (42) et/ou des pressions différentielles détectés au moyen du dispositif de mesure (100), de telle manière qu'une différence entre les niveaux de pression est produite, de préférence une grandeur définie et/ou pouvant être définie de la différence entre les niveaux de pression, à savoir les niveaux de pression statique, est produite.

8. Procédé selon l'une des revendications précédentes, **caractérisé en ce que**
- pour influencer, de préférence pour commander et/ou prérégler, le dispositif d'adaptation (80) peut être ajusté manuellement, et qu'un dispositif de mesure (100) est associé fonctionnellement au moins au système de séparation (60) et/ou au système de transport (50),
- le dispositif de mesure (100) étant mis au point pour détecter un niveau de pression et/ou un flux d'air et/ou un flux d'air d'alimentation et/ou une pression différentielle entre le système de séparation (60) et/ou le système de transport (50) et
- un dispositif d'affichage est présent, lequel est mis au point pour afficher un niveau de pression respectif et/ou un flux d'air (32) et/ou un flux d'air d'alimentation (42) respectif et/ou pour afficher une différence de pression entre le système de séparation (60) et le système de transport (50), de préférence entre au moins une conduite d'air (30) et une conduite d'alimentation (40).

9. Procédé selon l'une des revendications précédentes, **caractérisé en ce qu'**est associée au dispositif de séparation (62) respectif une unité de réception (64) destinée à recevoir le produit granulaire à épandre (24) provenant de la conduite d'alimentation (40) respective, l'unité de réception (64) étant mise au point pour séparer au moins en partie le produit granulaire à épandre (24) du flux d'air d'alimentation (42).

10. Procédé selon la revendication 9, **caractérisé en ce que** l'unité de réception (64) est couplée fonctionnellement, de préférence est raccordée, à la conduite d'air (30) au moyen d'un dispositif de raccordement (52), et que l'unité de réception (64) est mise au point pour acheminer proportionnellement le flux d'air d'alimentation (42) respectif en direction de l'organe de séparation (66) et l'acheminer proportionnellement en direction de la conduite d'air (30) au moyen du dispositif de raccordement (52), de préférence de telle manière qu'au moins pratiquement aucun flux d'air d'alimentation (42) n'est délivré directement depuis l'unité de réception (64) dans l'atmosphère.

11. Procédé selon l'une des revendications 9 à 10, **caractérisé en ce que** l'unité de réception (64) est couplée fonctionnellement, de préférence est raccordée, à l'organe de séparation (66) au moyen d'un dispositif de raccordement (52), et que l'unité de réception (64) est mise au point pour acheminer proportionnellement le flux d'air d'alimentation (42) respectif de préférence par un réservoir de produit à épandre (65), en direction de l'organe de séparation (66) et/ou l'acheminer proportionnellement au moyen du dispositif de raccordement (52) en direction de l'organe de séparation (66), de préférence de telle manière qu'au moins quasiment aucun flux d'air d'alimentation (42) n'est délivré directement depuis l'unité de réception (64) dans l'atmosphère.

12. Procédé selon l'une des revendications précédentes, **caractérisé en ce que**
- un dispositif de réglage est associé au dispositif d'adaptation (80) pour influencer, de préférence pour commander et/ou prérégler, et un dispositif de commande (90) est prévu, lequel est mis au point pour fournir des signaux de réglage pour le dispositif de réglage à l'aide d'une spécification de la grandeur de la différence du niveau de pression, à savoir à l'aide d'une spécification de la grandeur de la différence du niveau de pression statique, la différence de pression est spécifiée conformément à au moins une des conditions suivantes
- manuellement par une entrée utilisateur et/ou
- à l'aide d'une variété du produit granulaire à épandre (24) et/ou
- à l'aide de caractéristiques liées à la surface et/ou
- à l'aide de caractéristiques spécifiques à la machine.
